(19) Europäisches Patentamt
European Patent Office
Office européen des brevets

(11) EP 2 474 415 B1

(12) **EUROPEAN PATENT SPECIFICATION**

(45) Date of publication and mention of the grant of the patent:
**25.03.2015 Bulletin 2015/13**

(21) Application number: **10811736.7**

(22) Date of filing: **18.08.2010**

(51) Int Cl.:
***B32B 27/36*** *(2006.01)* ***B32B 27/30*** *(2006.01)*

(86) International application number:
**PCT/JP2010/063928**

(87) International publication number:
**WO 2011/024686 (03.03.2011 Gazette 2011/09)**

# (54) MULTI-LAYER STRUCTURE

MEHRSCHICHTIGE STRUKTUR

STRUCTURE MULTICOUCHE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.08.2009 JP 2009200936**
**31.08.2009 JP 2009200937**
**31.08.2009 JP 2009200938**

(43) Date of publication of application:
**11.07.2012 Bulletin 2012/28**

(73) Proprietor: **The Nippon Synthetic Chemical Industry Co., Ltd.**
**Osaka-shi, Osaka 530-0018 (JP)**

(72) Inventors:
- **KAWABE Masayuki**
  **Yokkaichi-shi**
  **Mie 510-8530 (JP)**
- **SHIBUTANI Mitsuo**
  **Osaka-shi**
  **Osaka 531-0076 (JP)**
- **INOUE Kaoru**
  **Osaka-shi**
  **Osaka 531-0076 (JP)**
- **SAKAI Norihito**
  **Osaka-shi**
  **Osaka 531-0076 (JP)**

(74) Representative: **Kuhnen & Wacker**
**Patent- und Rechtsanwaltsbüro**
**Prinz-Ludwig-Straße 40A**
**85354 Freising (DE)**

(56) References cited:
**WO-A1-2008/093615**
**JP-A- 3 281 244**
**JP-A- 11 348 197**
**JP-A- 60 122 148**
**JP-A- 2000 313 721**
**JP-A- 2006 123 528**
**US-A1- 2005 079 252**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 474 415 B1

## Description

### TECHNICAL FIELD

The present invention relates to a multilayer structure which includes a layer consisting primarily of a polyethylene terephthalate resin and a layer consisting primarily of a polyvinyl alcohol resin, and is excellent in interlayer adhesion between these layers.

### BACKGROUND ART

Polyvinyl alcohol resins are generally excellent in transparency, barrier property and the like, and are formed into films, sheets and the like for use as various packaging materials. Further, a container of a multilayer structure including a polyvinyl alcohol resin layer provided between polyethylene terephthalate resin layers is conventionally used as a container such as a bottle required to have a higher gas barrier property.

The container of the multilayer structure described above is produced by melt-coextrusion of a polyvinyl alcohol resin and a polyethylene terephthalate resin.

However, the polyvinyl alcohol resin has a melting point and a decomposition point which are close to each other. Where a product is formed from the polyvinyl alcohol resin through a melt-forming process, for example, the resulting formed product has a poor appearance due to occurrence of foreign matter and burnt deposit. To cope with this, a melt-formable polyvinyl alcohol resin composition has been proposed, which includes a polyvinyl alcohol having a polymerization degree of 200 to 1200, a saponification degree of 75 to 99.99 mol% and a melting point of 160°C to 230°C and containing terminal carboxyl groups and terminal lactone rings in a total amount of 0.008 to 0.15 mol%, and an alkali metal salt (see JP 2000/178396 A, in the following "PLT1").

However, the polyvinyl alcohol resin composition disclosed in PLT1 is insufficient to solve the aforementioned problem, because the fully saponified polyvinyl alcohol still has a higher melting point on the order of 200°C to 230°C. To solve this problem, it is proposed to use a polyvinyl alcohol resin containing 2 to 10 mol% of 1, 2-glycol bonds at its side chains (see JP 2004/075866 A, in the following "PLT2").

Further documents of the prior art relate to polymeric containers or polymerix materials used for containers. As such, the US 2005/0079252 A1 relates to multi-compartment package made from flexible polymeric material which is heat sealed. The polymer layer may comprise ethylene-vinyl alcohol copolymers and amorphous polyethylene terephthalate copolymers.

The JP 2006 123528 A relates to a biaxially stretched blow-molded bottle which is made from a thermoplastic polyester resin and an ethylene-vinyl alcohol copolymer. The JP 03 281244 A relates to a multilayered polymeric structure from a specific ethylene-vinyl alcohol copolymer layer and thermoplastic polyester or polycarbonate layer.

The JP 11 348197 A relates to a co-injection stretch blow polyester container consisting of a thermoplastic polyester layer and an ethylene-vinyl alcohol copolymer layer. The WO 2008/093615 A1 relates to a polyvinyl alcohol resin composition comprising a PVA resin. Further, the JP 2000 313721 A relates to a hydroxy group-containing copolymer and its production, whereupon the copolymer comprises a diol structural unit and a vinyl alcohol structural unit.

### SUMMARY OF INVENTION

In PLT2, it is possible to form a product having an excellent appearance under relatively low melt-forming temperature conditions, because the melting point is low in the absence of a plasticizer. However, a product formed by melt-extruding the polyvinyl alcohol resin together with a polyester resin on opposite sides of the polyvinyl alcohol resin still needs improvement in interlayer adhesion. Therefore, it is desirable to further improve the delamination resistance.

In view of the foregoing, it is an object of the present invention to provide a multilayer structure which is excellent in interlayer adhesion between layers of the polyethylene terephthalate resin and the polyvinyl alcohol resin.

To achieve the above object, the inventive multilayer structure includes: (A) a layer consisting primarily of a polyethylene terephthalate resin which comprises a dicarboxylic acid component unit including terephthalic acid and a diol component unit primarily including ethylene glycol; and (B) a layer provided in stacked adjacent relation to the layer (A) and consisting primarily of a polyvinyl alcohol resin having a structural unit represented by the following general formula (1):

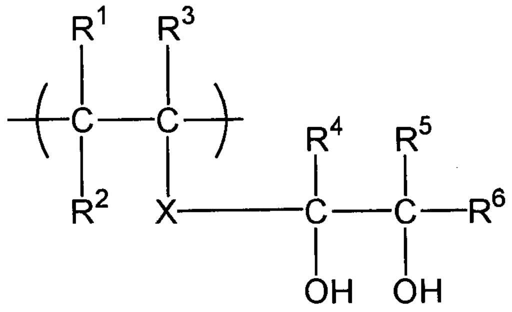

..... (1)

(wherein $R^1$, $R^2$ and $R^3$ each independently represent a hydrogen atom or an organic group; X represents a single bond or a bond chain; and $R^4$, $R^5$ and $R^6$ each independently represent a hydrogen atom or an organic group), and the layers (A) and (B) satisfy any one of the following features (x) to (z):

(x) the layer (A) consists primarily of the polyethylene terephthalate resin which comprises the dicarboxylic acid component unit including terephthalic acid and the diol component unit primarily including ethylene glycol, wherein the dicarboxylic acid component further includes a non-terephthalic-acid dicarboxylic acid in a copolymerization ratio of 15 to 40 mol% based on the overall amount of the dicarboxylic acid component, and the layer (B) consists primarily of the polyvinyl alcohol resin having the structural unit represented by the above general formula (1);
(y) the layer (A) consists primarily of the polyethylene terephthalate resin which comprises the dicarboxylic acid component unit including terephthalic acid and the diol component unit primarily including ethylene glycol, wherein the dicarboxylic acid component further includes a non-terephthalic-acid dicarboxylic acid in a copolymerization ratio of not less than 2 mol% and less than 15 mol% based on the overall amount of the dicarboxylic acid component, and the layer (B) consists primarily of the polyvinyl alcohol resin having the structural unit represented by the above general formula (1) and further comprises 0.03 to 1 mol% of at least one of an alkali metal salt and an alkali earth metal salt based on the total amount of structural units of the polyvinyl alcohol resin; and
(z) the layer (A) consists primarily of the polyethylene terephthalate resin which comprises the dicarboxylic acid component unit including terephthalic acid and the diol component unit primarily including ethylene glycol, wherein the polyethylene terephthalate resin has a terminal carboxyl group concentration of 15 to 60 equivalents/ton, and the layer (B) consists primarily of the polyvinyl alcohol resin having the structural unit represented by the above general formula (1).

In view of the foregoing, the inventors of the present invention conducted a series of studies to improve the interlayer adhesion between the polyethylene terephthalate resin layer and the polyvinyl alcohol resin layer. In the course of the studies, the inventors conceived an idea that a difference in shrinkage percentage between the layers is reduced by causing the shrinkage percentages of the layers to become closer to each other, and further conducted studies based on this idea. As a result of the studies, the inventors found that, where a polyethylene terephthalate resin comprising a dicarboxylic acid component including terephthalic acid and a non-terephthalic-acid dicarboxylic acid and a diol component primarily including ethylene glycol, and a polyvinyl alcohol resin having the structural unit represented by the above generally formula (1) are used, the crystallinity of the polyethylene terephthalate resin and the crystallinity of the polyvinyl alcohol resin are disturbed and reduced to make the layers less shrinkable, thereby reducing the difference in shrinkage percentage between the layers to improve the interlayer adhesion.
However, the improvement achieved simply by using the non-terephthalic-acid dicarboxylic acid is insufficient. Therefore, the inventors further conducted intensive studies on: (x) the proportion of the non-terephthalic-acid dicarboxylic acid component; (y) the copolymerization ratio of the non-terephthalic-acid dicarboxylic acid component, and a material for the layer to be formed by using the polyvinyl alcohol resin; and (z) the polyethylene terephthalate resin having carboxyl groups as reactive groups. As a result, the inventors found that, where (x) the non-terephthalic-acid dicarboxylic acid is used in a proportion of 15 to 40 mol% based on the overall amount of the dicarboxylic acid component, (y) the non-terephthalic-acid dicarboxylic acid is used in a proportion of not less than 2 mol% and less than 15 mol% based on the overall amount of the dicarboxylic acid component and 0.03 to 1 mol% of at least one of the alkali metal salt and the alkali earth metal salt is added to the polyvinyl alcohol resin for catalysis in an esterification reaction between carboxyl groups in the polyethylene terephthalate resin and hydroxyl groups in the polyvinyl alcohol resin for improvement in reactivity between these resins, or (z) the polyethylene terephthalate resin having a higher terminal carboxyl group concentration on the order of 15 to 60 equivalents/ton is used to provide a greater number of reaction sites in the polyethylene terephthalate resin for forming ester bonds between carboxyl groups of the polyethylene terephthalate resin and the hydroxyl groups of the polyvinyl alcohol resin in an interface between the layers, a multilayer structure can be provided which is improved in interlayer adhesion between the polyethylene terephthalate resin layer and the polyvinyl

alcohol resin layer and hence excellent in delamination resistance. Thus, the inventors attained the present invention.

According to the present invention, the multilayer structure includes the layer (A) consisting primarily of the polyethylene terephthalate resin which comprises the dicarboxylic acid component unit including terephthalic acid and the diol component unit primarily including ethylene glycol, and the layer (B) provided in stacked adjacent relation to the layer (A) and consisting primarily of the polyvinyl alcohol resin having the structural unit represented by the above general formula (1), and the layers (A) and (B) satisfy any one of the features (x) to (z) described above. Thus, the crystallinity of the polyethylene terephthalate resin and the crystallinity of the polyvinyl alcohol resin are reduced, so that the layers (A) and (B) formed from these resins are made less shrinkable. Thus, the delamination is less liable to occur due to the difference in shrinkage percentage. Therefore, the multilayer structure having such a layered structure is excellent in delamination resistance with improved interlayer adhesion.

Where the layer (B) consisting primarily of the polyvinyl alcohol resin further comprises 0.001 to 1 mol% of at least one of an alkali metal salt and an alkali earth metal salt based on the total amount of structural units of the polyvinyl alcohol resin in the feature (x) described above, the multilayer structure is provided as having more excellent delamination resistance.

Where the polyethylene terephthalate resin primarily includes terephthalic acid as the dicarboxylic acid component and ethylene glycol as the diol component, and the dicarboxylic acid component further includes a non-terephthalic-acid dicarboxylic acid in a copolymerization ratio of 2 to 40 mol% based on the overall amount of the dicarboxylic acid component in the feature (z) described above, the interlayer adhesion is further improved.

Where the layer (B) consisting primarily of the polyvinyl alcohol resin further comprises 0.001 to 1 mol% of at least one of an alkali metal salt and an alkali earth metal salt based on the total amount of structural units of the polyvinyl alcohol resin in the feature (z) described above, the multilayer structure is provided as having more excellent delamination resistance.

Where the non-terephthalic-acid dicarboxylic acid is isophthalic acid in any of the features (x) to (z), the interlayer adhesion is further improved.

DESCRIPTION OF EMBODIMENTS

Embodiments of the present invention will hereinafter be described in detail. However, the present invention is not limited to the embodiments.

The inventive multilayer structure is a multilayer structure which includes: (A) a layer consisting primarily of a specific polyethylene terephthalate (hereinafter sometimes abbreviated as "PET") resin; and (B) a layer provided in stacked adjacent relation to the layer (A) and consisting primarily of a polyvinyl alcohol (hereinafter sometimes abbreviated as "PVA") resin having a specific structural unit. In the present invention, the expression "consisting primarily of" means that the proportion of a major component is more than 50 % based on the overall amount, and is intended to include a case in which something is entirely composed of the major component alone. The inventive multilayer structure is merely required to include at least the aforementioned two layers provided in adjacent relation, and may be configured or shaped in other ways with provision of other layer.

In the inventive multilayer structure, the layer (A) and the layer (B) provided in adjacent relation satisfy any one of the following features (x) to (z):

(x) the layer (A) consists primarily of a polyethylene terephthalate resin which comprises a dicarboxylic acid component unit including terephthalic acid and a diol component unit primarily including ethylene glycol,
wherein the dicarboxylic acid component further includes a non-terephthalic-acid dicarboxylic acid in a copolymerization ratio of 15 to 40 mol% based on the overall amount of the dicarboxylic acid component, and the layer (B) consists primarily of a polyvinyl alcohol resin having a structural unit represented by the following general formula (1);
(y) the layer (A) consists primarily of a polyethylene terephthalate resin which comprises a dicarboxylic acid component unit including terephthalic acid and a diol component unit primarily including ethylene glycol,
wherein the dicarboxylic acid component further includes a non-terephthalic-acid dicarboxylic acid in a copolymerization ratio of not less than 2 mol% and less than 15 mol% based on the overall amount of the dicarboxylic acid component, and the layer (B) consists primarily of a polyvinyl alcohol resin having a structural unit represented by the following general formula (1) and further comprises 0.03 to 1 mol% of at least one of an alkali metal salt and an alkali earth metal salt based on the total amount of structural units of the polyvinyl alcohol resin; and
(z) the layer (A) consists primarily of a polyethylene terephthalate resin which comprises a dicarboxylic acid component unit including terephthalic acid and a diol component unit primarily including ethylene glycol,
wherein the polyethylene terephthalate resin has a terminal carboxyl group concentration of 15 to 60 equivalents/ton, and the layer (B) consists primarily of a polyvinyl alcohol resin having a structural unit represented by the following general formula (1):

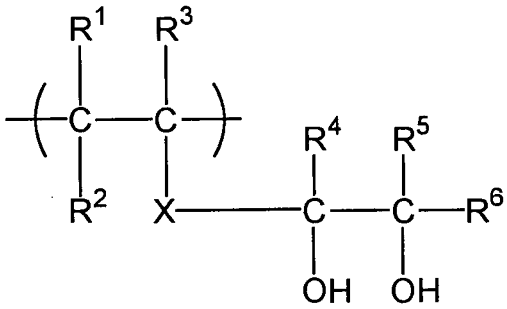

.....(1)

(wherein $R^1$, $R^2$ and $R^3$ each independently represent a hydrogen atom or an organic group; X represents a single bond or a bond chain; and $R^4$, $R^5$ and $R^6$ each independently represent a hydrogen atom or an organic group).

(1) Multilayer Structure of Feature (x)

The multilayer structure of the feature (x) will hereinafter be described.

First, the layer (A) consisting primarily of the specific PET resin will be described.

<Layer (A) consisting primarily of specific PET resin>

The layer (A) of the feature (x) is formed from a material primarily containing the specific PET resin, for example, by melt forming.

The specific PET resin is a polycondensation product obtained through a polycondensation reaction between a dicarboxylic acid component including terephthalic acid and a non-terephthalic-acid dicarboxylic acid and a diol component primarily including ethylene glycol, and features that the copolymerization ratio of the non-terephthalic-acid dicarboxylic acid in the dicarboxylic acid component is set in a range of 15 to 40 mol% based on the overall amount of the dicarboxylic acid component. The copolymerization ratio of the non-terephthalic-acid dicarboxylic acid in the dicarboxylic acid component is preferably in a range of 15 to 30 mol%, particularly preferably 20 to 30 mol%, based on the overall amount of the dicarboxylic acid component. If the copolymerization ratio of the non-terephthalic-acid dicarboxylic acid is excessively small outside the aforementioned range, it is impossible to create the effect of improving the interlayer adhesion by the disturbance of the crystallinity of the PET resin. If the copolymerization ratio of the non-terephthalic-acid dicarboxylic acid is excessively great, it is difficult to form the layer (A) consisting primarily of the specific PET resin.

Examples of the non-terephthalic-acid dicarboxylic acid in the dicarboxylic acid component include: aromatic dicarboxylic acids such as isophthalic acid, diphenyl-4,4'-dicarboxylic acid, diphenoxyethane dicarboxylic acid, 2,6-naphthalene dicarboxylic acid and 2,7-naphthalene dicarboxylic acid and ester forming derivatives thereof; aliphatic dicarboxylic acids such as adipic acid, sebacic acid, azelaic acid and succinic acid and ester forming derivatives thereof; alicyclic dicarboxylic acids such as cyclohexanedicarboxylic acid and hexahydroterephthalic acid and ester forming derivatives thereof; oxy acids such as p-oxybenzoic acid and oxycaproic acid and ester forming derivatives thereof; and trimellitic acid, pyromellitic acid and the like. These may be used either alone or in combination. In consideration of the processability, strength, costs and the like, isophthalic acid is preferably used.

Ethylene glycol is primarily used as the diol component. The diol component may include ethylene glycol alone. Exemplary diols to be used in combination with ethylene glycol include: aliphatic glycols such as diethylene glycol, trimethylene glycol, tetramethylene glycol and neopentyl glycol; alicyclic glycols such as 1,4-cyclohexanedimethanol; aromatic glycols such as bisphenol-A and alkylene oxide adducts of bisphenol-A; polyalkylene glycols such as polyethylene glycols, polypropylene glycols and polytetramethylene glycols; and glycerin, 1,3-propanediol, pentaerythritol and the like. These may be used either alone or in combination. Diethylene glycol is generated through a side reaction in production of ethylene glycol and, therefore, is generally contained in a small amount in ethylene glycol. For heat resistance, ethylene glycol is preferably used alone as the diol component, which may contain a small amount of diethylene glycol generated as a side product.

The specific PET resin is basically produced by a common polyester resin production process by using the dicarboxylic acid component primarily including terephthalic acid and the diol component primarily including ethylene glycol.

Exemplary production processes include: a direct polymerization process in which a dicarboxylic acid component primarily including terephthalic acid and a diol component primarily including ethylene glycol are subjected to esterification in an esterification reaction vessel and then the resulting esterification reaction product is transferred into a polycondensation reaction vessel and subjected to polycondensation; and an ester interchange process in which a dicarboxylic acid component primarily including a terephthalate forming derivative and a diol component primarily including ethylene glycol are subjected to an ester interchange reaction in an ester interchange reaction vessel and then the resulting ester interchange reaction product is transferred into a polycondensation reaction vessel and subjected to polycondensation. These reactions may be allowed to proceed in a batch process or in a sequential process. The non-terephthalic-acid dicarboxylic acid may be added at any time before the completion of the esterification reaction or the ester interchange reaction. For easy handling, the non-terephthalic-acid dicarboxylic acid is preferably added as a slurry prepared with the use of ethylene glycol.

In general, a resin prepared through the polycondensation reaction is extracted in a strand form from an extraction port provided at the bottom of the polycondensation reaction vessel, and subjected to water cooling, during or after which the resulting strands are cut into pellets by a cutter. After the polycondensation, the pellets are heat-treated to be further polymerized to a higher polymerization degree in a solid phase. At the same time, the amount of acetaldehyde and lower molecular weight oligomers generated as side reaction products can be reduced.

In the production processes, the esterification reaction is allowed to proceed, for example, at a temperature of about 200°C to about 270°C at a pressure of about $1\times10^5$ to about $4\times10^5$ Pa, as required, with the use of an esterification catalyst such as diantimony trioxide, or an organic acid salt or an alcoholate of antimony, titanium, magnesium or calcium, and the ester interchange reaction is allowed to proceed, for example, at a temperature of about 200°C to about 270°C at a pressure of about $1\times10^5$ to about $4\times10^5$ Pa, as required, with the use of an ester interchange catalyst such as an organic acid salt of lithium, sodium, potassium, magnesium, calcium, manganese, titanium or zinc.

The polycondensation reaction is allowed to proceed, for example, at a temperature of about 240°C to about 290°C at a reduced pressure on the order of about $1\times10^2$ to about $2\times10^3$ Pa, for example, by using a phosphorus compound such as orthophosphoric acid, phosphorous acid or an ester of any of these acids as a stabilizer, and using a metal oxide such as diantimony trioxide, germanium dioxide or germanium tetraoxide, or an organic acid salt or an alcoholate of antimony, germanium, zinc, titanium, cobalt or an alkali earth metal as a polycondensation catalyst.

The specific PET resin may be subjected to the solid-phase polymerization following the polycondensation reaction. The resin is preliminarily crystallized by heating at a temperature of about 120°C to about 200°C for 1 minute or longer, and then further polymerized at a temperature of about 180°C to a melting point minus about 5°C in an atmosphere of an inert gas such as nitrogen gas and/or at a reduced pressure on the order of about $1\times10^2$ to about $2\times10^3$ Pa.

The intrinsic viscosity of the specific PET resin is preferably in a range of not lower than 0.60 dl/g and not higher than 1.20 dl/g. Where the specific PET resin has an intrinsic viscosity falling within this range, the multilayer structure can be provided as having excellent strength and formability. If the intrinsic viscosity of the PET resin is lower than 0.60 dl/g, the strength is reduced. If the intrinsic viscosity is higher than 1.20 dl/g, the formability is reduced.

It is more preferred that the intrinsic viscosity of the specific PET resin is in a range of not lower than 0.60 dl/g and not higher than 1.00 dl/g.

As required, the layer (A) material primarily containing the specific PET resin may further contain additives such as a pigment dispersant, a tackifier, a fluidity improving agent, a surfactant, a defoaming agent, a release agent, a penetrating agent, a dye, a pigment, a fluorescent brightening agent, a UV absorber, an antioxidant, an antiseptic agent and an antifungal agent blended in addition to the specific PET resin.

Exemplary methods for blending the ingredients include a method utilizing a tumbler or a Henschel mixer, and a method in which the ingredients are quantitatively fed into an extruder hopper by a feeder and then mixed. The ingredients may be kneaded with the use of a single screw extruder, a twin screw extruder or the like.

Next, the properties of the layer (A) consisting primarily of the specific PET resin will be described.

<Properties of layer (A) consisting primarily of specific PET resin>

The thickness of the layer (A) is not particularly limited, but typically 0.1 to 800 μm, particularly 0.1 to 500 μm, preferably 0.1 to 300 μm. If the thickness of the layer (A) is excessively great, the multilayer structure tends to have reduced flexibility. If the thickness is excessively small, on the other hand, the multilayer structure tends to have poorer strength, making it difficult for various formed products to maintain their shapes.

Next, the layer (B) consisting primarily of the PVA resin will be described.

<Layer (B) consisting primarily of PVA resin>

In the feature (x), the layer (B) consisting primarily of the PVA resin is formed from a material primarily containing the specific PVA resin having a structural unit represented by the following general formula (1), for example, by melt forming:

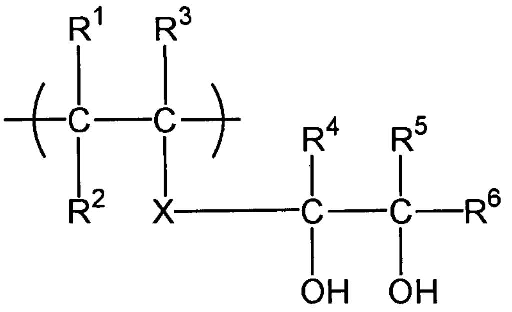

..... (1)

(wherein $R^1$, $R^2$ and $R^3$ each independently represent a hydrogen atom or an organic group; X represents a single bond or a bond chain; and $R^4$, $R^5$ and $R^6$ each independently represent a hydrogen atom or an organic group).

As described above, the specific PVA resin features that it has the structural unit represented by the general formula (1), i.e., a 1,2-diol structural unit. Like an ordinary PVA resin, the specific PVA resin further has a vinyl alcohol structural unit and a vinyl acetate structural unit, and the proportions of these structural units are properly controlled by the saponification degree.

First, the structural unit represented by the above general formula (1) will be described. In the 1,2-diol structural unit represented by the above general formula (1), $R^1$ to $R^3$ and $R^4$ to $R^6$, which may be the same or different in the formula (1), are each a hydrogen atom or a monovalent organic group. For the copolymerization reaction of the monomers and the industrial handling ease in the production process, it is particularly preferred that $R^1$ to $R^3$ and $R^4$ to $R^6$ are all hydrogen atoms. As long as the properties of the resin are not significantly impaired, at least one of $R^1$ to $R^3$ and $R^4$ to $R^6$ may be an organic group. The organic group is not particularly limited, and preferred examples of the organic group include $C_1$ to $C_4$ alkyl groups such as a methyl group, an ethyl group, a n-propyl group, an isopropyl group, a n-butyl group, an isobutyl group and a tert-butyl group. As required, the organic group may have a substituent such as a halogen group, a hydroxyl group, an ester group, a carboxylic group or a sulfonic group.

In the 1, 2-diol structural unit represented by the above general formula (1), X in the formula (1) is preferably a single bond, because the resulting PVA has excellent thermal stability and is free from excessive reduction in crystallinity and deterioration in melt fluidity. The expression "X is a single bond" means that X per se serves as a bonding link.

As long as the effects of the present invention are not impaired, X may be any of various bonding chains. Examples of the bonding chains include hydrocarbon groups such as alkylenes, alkenylenes, alkynylenes, phenylene and naphthylene (which may be substituted with a halogen such as fluorine, chlorine or bromine), -O-, $-(CH_2O)_m-$, $-(OCH_2)_m-$, $-(CH_2O)_mCH_2-$, -CO-, -COCO-, $-CO(CH_2)_mCO-$, $-CO(C_6H_4)CO-$, -S-, -CS-, -SO-, $-SO_2-$, -NR-, -CONR-, -NRCO-, -CSNR-, -NRCS-, -NRNR-, $-HPO_4-$, $-Si(OR)_2-$,$-OSi(OR)_2-$, $-OSi(OR)_2O-$, $-Ti(OR)_2-$, $-OTi(OR)_2-$,$-OTi(OR)_2O-$, -Al(OR)-, -OAl(OR)- and -OA1(OR)O-.

In the above bonding chains, Rs which may the same or different are substituents such as a hydrogen atom and alkyl groups, and a repetition number m is a natural number. Among the bonding chains described above, alkylene groups each having not greater than 6 carbon atoms and $-CH_2OCH_2-$ are preferred for stability in the production process or during use.

In the feature (x), therefore, a PVA resin having a 1, 2-diol structural unit represented by the following formula (1a) is particularly preferably used as the specific PVA resin including the 1,2-diol structural unit represented by the above general formula (1):

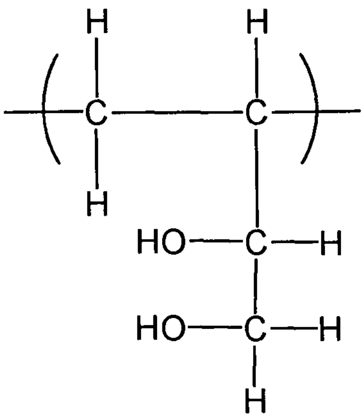

..... (1a)

Exemplary processes for producing the specific PVA resin to be used in the feature (x) include: (α) a process in which a copolymer of vinyl acetate and a 3,4-diacyloxy-1-butene, particularly 3,4-diacetoxy-l-butene, is saponified; (β) a process in which a copolymer of vinyl acetate and vinyl ethylene carbonate is saponified, followed by decarbonation; (γ) a process in which a copolymer of vinyl acetate and a 2,2-dialkyl-4-vinyl-1,3-dioxolane is saponified, followed by deketalization; and (δ) a process in which a copolymer of vinyl acetate and glycerin monoallyl ether is saponified. Particularly, the production process (α) is preferably employed in consideration of a production advantage such that the polymerization properly proceeds to easily and evenly introduce the 1,2-diol structural unit into the PVA resin, and the properties of the finally obtained PVA resin.

The average polymerization degree of the specific PVA resin thus prepared (as measured in conformity with JIS K 6726) is typically 250 to 2000, particularly 300 to 1000, preferably 300 to 600. If the average polymerization degree is excessively low, the PVA resin layer tends to have insufficient strength. If the average polymerization degree is excessively high, on the other hand, the PVA resin tends to have lower fluidity, for example, when the layer is melt-formed. This makes it difficult to form a layer having a desired thickness.

The saponification degree of the specific PVA resin is typically 80 to 100 mol%, particularly 85 to 99.9 mol%, preferably 88 to 99.9 mol%. If the saponification degree is excessively low, a long-run property (long-term operation stability during the melt forming) tends to be deteriorated, and an acetic acid odor is liable to emanate. In the present invention, the saponification degree is defined as the ratio (mol%) of the amount of the converted hydroxyl groups to the amount of the ester portion of the vinyl ester monomer.

The saponification for the specific PVA resin may be achieved, for example, in the following manner. Typically, the PVA resin is dissolved in an alcohol solvent, and then saponified in the presence of an alkali catalyst or an acid catalyst.

Usable examples of the alcohol solvent include methanol, ethanol, butanol, isopropanol, and various alcohol/methyl acetate solvent mixtures such as a methanol/methyl acetate solvent mixture. The concentration of the PVA resin in the alcohol solvent is preferably selected from a range of 10 to 60 wt%.

Usable examples of the alkali catalyst include hydroxides and alcoholates of alkali metals such as sodium hydroxide, potassium hydroxide, sodium methylate, sodium ethylate and potassium methylate. Usable examples of the acid catalyst include aqueous solutions of inorganic acids such as hydrochloric acid and sulfuric acid, and organic acids such as p-toluenesulfonic acid. The amount of the alkali catalyst to be used is preferably 1 to 100 mmol, particularly 1 to 40 mmol, preferably 1 to 20 mmol, per 1 mol of the vinyl acetate structural unit of the PVA resin. If the use amount of the alkali catalyst is excessively small, it is difficult to increase the saponification degree to an intended level. It is not preferred to use an excessively great amount of the alkali catalyst, because the saponification degree tends to become much higher than the intended level with difficulty in control. In general, the saponification temperature is preferably, for example, 10°C to 70°C, more preferably 20°C to 50°C.

The amount of 1,2-diol bonds introduced in the specific PVA resin, i.e., the proportion of the 1,2-diol structural unit represented by the above general formula (1) (modification degree), is typically 0.1 to 12 mol%, particularly 1 to 10 mol%, preferably 3 to 8 mol%. If the proportion (modification degree) is excessively low, the melting point tends to be higher, thereby deteriorating the formability. If the proportion (modification degree) is excessively high, it is difficult to increase the polymerization degree in the production process, thereby reducing the productivity.

The specific PVA resin described above may be used alone, or may be used in combination with other PVA resin, as long as the properties (particularly the melt formability) are not impaired.

Examples of the other PVA resin include an unmodified PVA resin (having a polymerization degree of 300 to 500 and a saponification degree of 80 mol% or higher), a carboxylic acid modified PVA resin, an acetal modified PVA resin, an amide modified PVA resin, a vinyl ether modified PVA resin, an α-olefin (e.g., ethylene) modified PVA resin, a vinyl ester modified PVA resin, an amine modified PVA resin and an oxyalkylene modified PVA resin. As required, any of these may be blended, for example, in a proportion of 0 to 40 wt% based on the total amount of the PVA resins.

In the feature (x), as described above, the material primarily containing the specific PVA resin having the structural unit represented by the above general formula (1) is used as the layer (B) material. More specifically, the specific PVA resin preferably accounts for not less than 50 wt% of the layer (B) material.

For improvement in interlayer adhesion and melt-formability, it is preferred to blend at least one of an alkali metal salt and an alkali earth metal salt in the layer (B) material. Examples of the alkali metal salt include potassium and sodium metal salts of organic acids such as acetic acid, propionic acid, butyric acid, lauric acid, stearic acid, 12-hydroxystearic acid, oleic acid and behenic acid, and inorganic acids such as sulfuric acid, sulfurous acid, carbonic acid and phosphoric acid. Examples of the alkali earth metal salt include calcium and magnesium metal salts of organic acids such as acetic acid, propionic acid, butyric acid, lauric acid, stearic acid, oleic acid and behenic acid, and inorganic acids such as sulfuric acid, sulfurous acid, carbonic acid and phosphoric acid. These may be used either alone or in combination. Particularly, sodium acetate as the alkali metal salt and magnesium acetate as the alkali earth metal salt are preferably used either alone or in combination in consideration of the magnitude of the effect for the blend amount.

At least one of the alkali metal salt and the alkali earth metal salt is typically blended in an amount of 0.001 to 1 mol%, particularly 0.002 to 0.8 mol%, preferably 0.01 to 0.5 mol%, based on the total amount of the structural units

of the PVA resin. If the amount of the metal salt is excessively small, it is difficult to create the effect of further improving the interlayer adhesion. If the amount is excessively great, on the other hand, the resulting resin is liable to be colored, and the resulting multilayer structure tends to have a poorer appearance due to foaming attributable to thermal decomposition.

The layer (B) material may contain other ingredient in addition to the specific PVA resin and the metal salt. Examples of the other ingredient include: plasticizers including aliphatic polyvalent alcohols such as glycerin, ethylene glycol and hexanediol, ethylene oxide adducts of these polyvalent alcohols, and sugar alcohols such as sorbitol, mannitol and pentaerythritol; lubricants including saturated aliphatic amide compounds such as stearamide and ethylene bisstearamide, unsaturated aliphatic amide compounds such as oleamide, aliphatic metal salts such as calcium stearate, magnesium stearate and zinc stearate, and lower molecular weight polyolefins such as lower molecular weight polyethylenes and lower molecular weight polypropylenes each having a molecular weight of about 500 to about 10000; inorganic acids such as boric acid and phosphoric acid; and antioxidants, heat stabilizers, light stabilizers, UV absorbers, colorants, antistatic agents, surfactants, antiseptic agents, antibiotic agents, antiblocking agents, slip agents and fillers, which may be blended as required.

The layer (B) material is prepared, for example, in the following manner: by preparing the specific PVA resin, and then blending any of the aforementioned ingredients in the specific PVA resin as required.

The properties of the layer (B) consisting primarily of the PVA resin will be described.

<Properties of layer (B) consisting primarily of PVA resin>

The thickness of the layer (B) consisting primarily of the PVA resin is typically 0.1 to 500 μm, particularly 0.3 to 300 μm, preferably 0.5 to 100 μm. If the thickness of the layer (B) is excessively great, the resulting multilayer structure is less flexible with higher rigidity and, therefore, tends to have lower impact resistance. If the thickness is excessively small, on the other hand, the resulting multilayer structure tends to fail to exhibit a sufficient barrier property.

(2) Multilayer Structure of Feature (y)

The multilayer structure of the feature (y) will hereinafter be described.

First, the layer (A) consisting primarily of the specific PET resin will be described.

<Layer (A) consisting primarily of specific PET resin>

The layer (A) of the feature (y) is formed from a material primarily containing the specific PET resin, for example, by melt forming.

The specific PET resin is a product of polycondensation between a dicarboxylic acid component including terephthalic acid and a diol component primarily including ethylene glycol, and features that the copolymerization ratio of a non-terephthalic-acid dicarboxylic acid in the dicarboxylic acid component is set in a range of not less than 2 mol% and less than 15 mol% based on the overall amount of the dicarboxylic acid component. The copolymerization ratio of the non-terephthalic-acid dicarboxylic acid in the dicarboxylic acid component is preferably in a range of 2 to 12 mol%, particularly preferably 5 to 12 mol%, based on the overall amount of the dicarboxylic acid component. If the copolymerization ratio of the non-terephthalic-acid dicarboxylic acid is excessively small outside the aforementioned range, it is impossible to create the effect of improving the interlayer adhesion by the disturbance of the crystallinity of the PET resin. If the copolymerization ratio of the non-terephthalic-acid dicarboxylic acid is excessively great, it is difficult to form the layer (A) consisting primarily of the specific PET resin.

Examples of the non-terephthalic-acid dicarboxylic acid in the dicarboxylic acid component include: aromatic dicarboxylic acids such as isophthalic acid, diphenyl-4,4'-dicarboxylic acid, diphenoxyethane dicarboxylic acid, 2,6-naphthalene dicarboxylic acid and 2,7-naphthalene dicarboxylic acid and ester forming derivatives thereof; aliphatic dicarboxylic acids such as adipic acid, sebacic acid, azelaic acid and succinic acid and ester forming derivatives thereof; alicyclic dicarboxylic acids such as cyclohexanedicarboxylic acid and hexahydroterephthalic acid and ester forming derivatives thereof; oxy acids such as p-oxybenzoic acid and oxycaproic acid and ester forming derivatives thereof; and trimellitic acid, pyromellitic acid and the like. These may be used either alone or in combination. In consideration of the processability, strength, costs and the like, isophthalic acid is preferably used.

Ethylene glycol is primarily used as the diol component. The diol component may include ethylene glycol alone. Exemplary diols to be used in combination with ethylene glycol include: aliphatic glycols such as diethylene glycol, trimethylene glycol, tetramethylene glycol and neopentyl glycol; alicyclic glycols such as 1,4-cyclohexanedimethanol; aromatic glycols such as bisphenol-A and alkylene oxide adducts of bisphenol-A; polyalkylene glycols such as polyethylene glycols, polypropylene glycols and polytetramethylene glycols; and glycerin, 1,3-propanediol, pentaerythritol and the like. These may be used either alone or in combination. Diethylene glycol is generated through a side reaction in

the production of ethylene glycol and, therefore, is generally contained in a small amount in ethylene glycol. For heat resistance, ethylene glycol is preferably used alone as the diol component, which may contain a small amount of diethylene glycol generated as a side product.

The specific PET resin is basically produced by a common polyester resin production process by using the dicarboxylic acid component primarily including terephthalic acid and the diol component primarily including ethylene glycol.

Exemplary production processes include: a direct polymerization process in which a dicarboxylic acid component primarily including terephthalic acid and a diol component primarily including ethylene glycol are subjected to esterification in an esterification reaction vessel and then the resulting esterification reaction product is transferred into a polycondensation reaction vessel and subjected to polycondensation; and an ester interchange process in which a dicarboxylic acid component primarily including a terephthalate forming derivative and a diol component primarily including ethylene glycol are subjected to an ester interchange reaction in an ester interchange reaction vessel and then the resulting ester interchange reaction product is transferred into a polycondensation reaction vessel and subjected to polycondensation. These reactions may be allowed to proceed in a batch process or in a sequential process. The non-terephthalic-acid dicarboxylic acid may be added at any time before the completion of the esterification reaction or the ester interchange reaction. For easy handling, the non-terephthalic-acid dicarboxylic acid is preferably added as a slurry prepared with the use of ethylene glycol.

In general, a resin prepared through the polycondensation reaction is extracted in a strand form from an extraction port provided at the bottom of the polycondensation reaction vessel, and subjected to water cooling, during or after which the resulting strands are cut into pellets by a cutter. After the polycondensation, the pellets are heat-treated to be further polymerized to a higher polymerization degree in a solid phase. At the same time, the amount of acetaldehyde and lower molecular weight oligomers generated as side reaction products can be reduced.

In the production processes, the esterification reaction is allowed to proceed, for example, at a temperature of about 200°C to about 270°C at a pressure of about $1\times10^5$ to about $4\times10^5$ Pa, as required, with the use of an esterification catalyst such as diantimony trioxide, or an organic acid salt or an alcoholate of antimony, titanium, magnesium or calcium, and the ester interchange reaction is allowed to proceed, for example, at a temperature of about 200°C to about 270°C at a pressure of about $1\times10^5$ to about $4\times10^5$ Pa, as required, with the use of an ester interchange catalyst such as an organic acid salt of lithium, sodium, potassium, magnesium, calcium, manganese, titanium or zinc.

The polycondensation reaction is allowed to proceed, for example, at a temperature of about 240°C to about 290°C at a reduced pressure on the order of about $1\times10^2$ to about $2\times10^3$ Pa, for example, by using a phosphorus compound such as orthophosphoric acid, phosphorous acid or an ester of any of these acids as a stabilizer, and using a metal oxide such as diantimony trioxide, germanium dioxide or germanium tetraoxide, or an organic acid salt or an alcoholate of antimony, germanium, zinc, titanium, cobalt or an alkali earth metal as a polycondensation catalyst.

The specific PET resin may be subjected to the solid-phase polymerization following the polycondensation reaction. The resin is preliminarily crystallized by heating at a temperature of about 120°C to about 200°C for 1 minute or longer, and then further polymerized at a temperature of about 180°C to a melting point minus about 5°C in an atmosphere of an inert gas such as nitrogen gas and/or at a reduced pressure on the order of about $1\times10^2$ to about $2\times10^3$ Pa.

As required, the layer (A) material primarily containing the specific PET resin may further contain additives such as a pigment dispersant, a tackifier, a fluidity improving agent, a surfactant, a defoaming agent, a release agent, a penetrating agent, a dye, a pigment, a fluorescent brightening agent, a UV absorber, an antioxidant, an antiseptic agent and an antifungal agent blended in addition to the specific PET resin.

Exemplary methods for blending the ingredients include a method utilizing a tumbler or a Henschel mixer, and a method in which the ingredients are quantitatively fed into an extruder hopper by a feeder and then mixed. The ingredients may be kneaded with the use of a single screw extruder, a twin screw extruder or the like.

Next, the properties of the layer (A) consisting primarily of the specific PET resin will be described.

<Properties of layer (A) consisting primarily of specific PET resin>

The thickness of the layer (A) is not particularly limited, but typically 0.1 to 800 μm, particularly 0.1 to 500 μm, preferably 0.1 to 300 μm. If the thickness of the layer (A) is excessively great, the multilayer structure tends to have reduced flexibility. If the thickness is excessively small, on the other hand, the multilayer structure tends to have poorer strength, making it difficult for various formed products to maintain their shapes.

Next, the layer (B) consisting primarily of the PVA resin will be described.

<Layer (B) consisting primarily of PVA resin>

In the feature (y), the layer (B) consisting primarily of the PVA resin is formed from a material primarily containing

the specific PVA resin having a structural unit represented by the following general formula (1) and containing at least one of an alkali metal salt and an alkali earth metal salt in a specific proportion, for example, by melt forming:

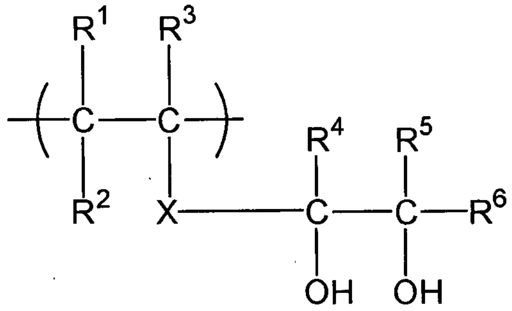

..... (1)

(wherein $R^1$, $R^2$ and $R^3$ each independently represent a hydrogen atom or an organic group; X represents a single bond or a bond chain; and $R^4$, $R^5$ and $R^6$ each independently represent a hydrogen atom or an organic group).

As described above, the specific PVA resin features that it has the structural unit represented by the general formula (1), i.e., a 1,2-diol structural unit. Like an ordinary PVA resin, the specific PVA resin further has a vinyl alcohol structural unit and a vinyl acetate structural unit in addition to the above structural unit, and the proportions of these structural units are properly controlled by the saponification degree.

First, the structural unit represented by the above general formula (1) will be described. In the 1,2-diol structural unit represented by the above general formula (1), $R^1$ to $R^3$ and $R^4$ to $R^6$, which may be the same or different in the formula (1), are each a hydrogen atom or a monovalent organic group as in the feature (x) . For the copolymerization reaction of the monomers and the industrial handling ease in the production process, it is particularly preferred that $R^1$ to $R^3$ and $R^4$ to $R^6$ are all hydrogen atoms. As long as the properties of the resin are not significantly impaired, at least one of $R^1$ to $R^3$ and $R^4$ to $R^6$ may be an organic group. The organic group is not particularly limited, and preferred examples of the organic group include $C_1$ to $C_4$ alkyl groups such as a methyl group, an ethyl group, a n-propyl group, an isopropyl group, a n-butyl group, an isobutyl group and a tert-butyl group. As required, the organic group may have a substituent such as a halogen group, a hydroxyl group, an ester group, a carboxylic group or a sulfonic group.

In the 1, 2-diol structural unit represented by the above general formula (1), X in the formula (1) is preferably a single bond, because the resulting PVA has excellent thermal stability and is free from excessive reduction in crystallinity and deterioration in melt fluidity. The expression "X is a single bond" means that X per se serves as a bonding link.

As long as the effects of the present invention are not impaired, X may be any of various bonding chains. Examples of the bonding chains include hydrocarbon groups such as alkylenes, alkenylenes, alkynylenes, phenylene and naphthylene (which may be substituted with a halogen such as fluorine, chlorine or bromine), -O-, $-(CH_2O)_m-$, $-(OCH_2)_m-$, $-(CH_2O)_mCH_2-$, -CO-, -COCO-, $-CO(CH_2)_mCO-$, $-CO(C_6H_4)CO-$, -S-, -CS-, -SO-, $-SO_2-$, -NR-, -CONR-, -NRCO-, -CSNR-, -NRCS-, -NRNR-, $-HPO_4-$, $-Si(OR)_2-$, $-OSi(OR)_2-$, $-OSi(OR)_2O-$, $-Ti(OR)_2-$, $-OTi(OR)_2-$, $-OTi(OR)_2O-$ -Al(OR)-, -OAl(OR)- and -OAl(OR)O-.

In the above bonding chains, Rs which may the same or different are each a substituent such as a hydrogen atom or an alkyl group, and a repetition number m is a natural number. Among the bonding chains described above, alkylene groups each having not greater than 6 carbon atoms and $-CH_2OCH_2-$ are preferred for stability in the production process or during use.

In the feature (y), therefore, a PVA resin having a 1, 2-diol structural unit represented by the following formula (1a) is particularly preferably used as the specific PVA resin including the 1,2-diol structural unit represented by the above general formula (1) as in the feature (x):

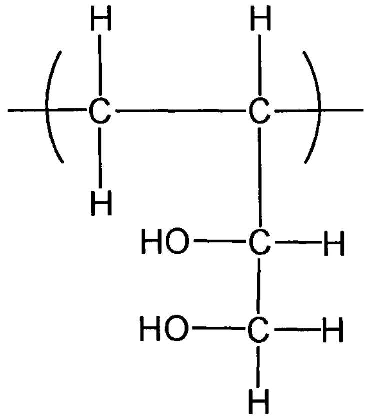

..... (1a)

As in the feature (x), exemplary processes for producing the specific PVA resin to be used in the feature (y) include: (α) a process in which a copolymer of vinyl acetate and a 3,4-diacyloxy-1-butene, particularly 3,4-diacetoxy-1-butene, is saponified; (β) a process in which a copolymer of vinyl acetate and vinyl ethylene carbonate is saponified, followed by decarbonation; (γ) a process in which a copolymer of vinyl acetate and a 2,2-dialkyl-4-vinyl-1,3-dioxolane is saponified, followed by deketalization; and (δ) a process in which a copolymer of vinyl acetate and glycerin monoallyl ether is saponified. Particularly, the production process (α) is preferably employed in consideration of a production advantage such that the polymerization properly proceeds to easily and evenly introduce the 1,2-diol structural unit into the PVA resin, and the properties of the finally obtained PVA resin.

The average polymerization degree of the specific PVA resin thus prepared (as measured in conformity with JIS K 6726) is typically 200 to 2000, particularly 250 to 1000, preferably 300 to 600. If the average polymerization degree is excessively low, the PVA resin layer tends to be brittle. If the average polymerization degree is excessively high, on the other hand, the PVA resin tends to have lower fluidity, for example, when the layer is melt-formed. This makes it difficult to form a layer having a desired thickness.

The saponification degree of the specific PVA resin is typically 80 to 100 mol%, particularly 85 to 99.9 mol%, preferably 88 to 99.9 mol%. If the saponification degree is excessively low, a long-run property (long-term operation stability during the melt forming) tends to be deteriorated, and an acetic acid odor is liable to emanate. In the present invention, the saponification degree is defined as the ratio (mol%) of the amount of the converted hydroxyl groups to the amount of the ester portion of the vinyl ester monomer.

The saponification for the specific PVA resin may be achieved, for example, in the following manner. Typically, the PVA resin is dissolved in an alcohol solvent, and then saponified in the presence of an alkali catalyst or an acid catalyst.

Usable examples of the alcohol solvent include methanol, ethanol, butanol, isopropanol, and various alcohol/methyl acetate solvent mixtures such as a methanol/methyl acetate solvent mixture. The concentration of the PVA resin in the alcohol solvent is preferably selected from a range of 10 to 60 wt%.

Usable examples of the alkali catalyst include hydroxides and alcoholates of alkali metals such as sodium hydroxide, potassium hydroxide, sodium methylate, sodium ethylate and potassium methylate. Usable examples of the acid catalyst include aqueous solutions of inorganic acids such as hydrochloric acid and sulfuric acid, and organic acids such as p-toluenesulfonic acid. The amount of the alkali catalyst to be used is 1 to 100 mmol, particularly 1 to 40 mmol, preferably 1 to 20 mmol, per 1 mol of the vinyl acetate structural unit of the PVA resin. If the use amount of the alkali catalyst is excessively small, it is difficult to increase the saponification degree to an intended level. It is not preferred to use an excessively great amount of the alkali catalyst, because the saponification degree tends to become much higher than the intended level with difficulty in control. In general, the saponification temperature is preferably, for example, 10°C to 70°C, more preferably 20°C to 50°C.

The amount of 1,2-diol bonds introduced in the specific PVA resin, i.e., the proportion of the 1,2-diol structural unit represented by the above general formula (1) (modification degree), is typically 0.1 to 12 mol%, particularly 1 to 10 mol%, preferably 3 to 8 mol%. If the proportion (modification degree) is excessively low, the melting point tends to be higher, thereby deteriorating the formability. If the proportion (modification degree) is excessively high, it is difficult to increase the polymerization degree in the production process, thereby reducing the productivity.

For the layer (B) material, the specific PVA resin described above may be used alone, or may be used in combination with other PVA resin, as long as the properties (particularly the melt formability) are not impaired.

Examples of the other PVA resin include an unmodified PVA resin (having a polymerization degree of 300 to 500 and a saponification degree of 80 mol% or higher), a carboxylic acid modified PVA resin, an acetal modified PVA resin, an amide modified PVA resin, a vinyl ether modified PVA resin, an α-olefin (e.g., ethylene) modified PVA resin, a vinyl ester modified PVA resin, an amine modified PVA resin and an oxyalkylene modified PVA resin. As required,

any of these may be blended, for example, in a proportion of 0 to 40 wt% based on the total amount of the PVA resins.

For the layer (B) material in the feature (y), an alkali metal salt and an alkali earth metal salt may be used either alone or in combination in addition to the specific PVA resin having the structural unit represented by the above general formula (1). As described above, these metal salts each serve as a catalyst for the esterification reaction between carboxyl groups in the dicarboxylic acid component of the PET resin and hydroxyl groups in the specific PVA resin.

Examples of the alkali metal salt include potassium and sodium metal salts of organic acids such as acetic acid, propionic acid, butyric acid, lauric acid, stearic acid, oleic acid and behenic acid, and inorganic acids such as sulfuric acid, sulfurous acid, carbonic acid and phosphoric acid. Examples of the alkali earth metal salt include calcium and magnesium metal salts of organic acids such as acetic acid, propionic acid, butyric acid, lauric acid, stearic acid, 12-hydroxystearic acid, oleic acid and behenic acid, and inorganic acids such as sulfuric acid, sulfurous acid, carbonic acid and phosphoric acid. These may be used either alone or in combination. Particularly, sodium acetate as the alkali metal salt and magnesium acetate and magnesium stearate as the alkali earth metal salt are preferably used either alone or in combination in consideration of the magnitude of the effect for the blend amount.

At least one of the alkali metal salt and the alkali earth metal salt is typically blended in an amount of 0.03 to 1 mol%, particularly 0.05 to 0 . 8 mol o, preferably 0.08 to 0.5 mol%, based on the total amount of the structural units of the PVA resin. If the amount of the metal salt is excessively small, it is difficult to create the effect of further improving the interlayer adhesion. If the amount is excessively great, on the other hand, the resulting resin is liable to be colored, and the resulting multilayer structure tends to have a poorer appearance due to foaming attributable to thermal decomposition.

The layer (B) material may contain other ingredient in addition to the specific PVA resin and the metal salt. Examples of the other ingredient include: plasticizers including aliphatic polyvalent alcohols such as glycerin, ethylene glycol and hexanediol, ethylene oxide adducts of these polyvalent alcohols, and sugar alcohols such as sorbitol, mannitol and pentaerythritol; lubricants including saturated aliphatic amide compounds such as stearamide and ethylene bisstearamide, unsaturated aliphatic amide compounds such as oleamide, aliphatic metal salts such as calcium stearate, magnesium stearate and zinc stearate, and lower molecular weight polyolefins such as lower molecular weight polyethylenes and lower molecular weight polypropylenes each having a molecular weight of about 500 to about 10000; inorganic acids such as boric acid and phosphoric acid; and antioxidants, heat stabilizers, light stabilizers, UV absorbers, colorants, antistatic agents, surfactants, antiseptic agents, antibiotic agents, antiblocking agents, slip agents and fillers, which may be blended as required.

The properties of the layer (B) consisting primarily of the PVA resin will be described.

<Properties of layer (B) consisting primarily of PVA resin>

The thickness of the layer (B) consisting primarily of the PVA resin is typically 0.1 to 500 μm, particularly 0.3 to 300 μm, preferably 0.5 to 100 μm. If the thickness of the layer (B) is excessively great, the resulting multilayer structure is less flexible with higher rigidity and, therefore, tends to have lower impact resistance. If the thickness is excessively small, on the other hand, the resulting multilayer structure tends to fail to exhibit a sufficient barrier property.

(3) Multilayer Structure of Feature (z)

The multilayer structure of the feature (z) will hereinafter be described.

First, the layer (A) consisting primarily of the specific PET resin will be described.

<Layer (A) consisting primarily of specific PET resin>

The layer (A) of the feature (z) is formed from a material primarily containing the specific PET resin, for example, by melt forming.

The specific PET resin is a product of condensation between a dicarboxylic acid component including terephthalic acid and a diol component primarily including ethylene glycol, and features that its terminal carboxyl group concentration is in a range of 15 to 60 equivalents/ton. The terminal carboxyl group concentration is preferably 18 to 50 equivalents/ton, particularly preferably 20 to 40 equivalents/ton. If the terminal carboxyl group concentration is excessively low outside the aforementioned range, the number of carboxyl groups each serving as a so-called reaction site is too small, failing to create the effect of improving the adhesion between the layers through the esterification reaction between the carboxyl groups and the hydroxyl groups in the PVA resin to be described later. If the terminal carboxyl group concentration is excessively high, on the other hand, the resulting PET resin is liable to suffer from hydrolysis and, hence has a reduced molecular weight. This reduces the strength of the resulting multilayer structure.

The terminal carboxyl group concentration (AV) is determined, for example, in the following manner. After a sample of the specific PET resin is dissolved in a solvent, the resulting solution is neutralized through titration with an

alkali solution. Blank titration is carried out in substantially the same manner without the use of the PET resin sample, and the terminal carboxyl group concentration (AV) is calculated from the following expression:

$$AV\ (\text{equivalents/ton}) = (A - B) \times 0.1 \times f/W$$

wherein A is the amount (μL) of the alkali solution required for the titration of the sample, B is the amount (μL) of the alkali solution required for the blank titration, W is the amount (g) of the PET resin sample, and f is the titer of the alkali solution.

The specific PET resin is prepared, for example, through a polycondensation reaction between a dicarboxylic acid component including terephthalic acid and a non-terephthalic-acid dicarboxylic acid and a diol component primarily including ethylene glycol.

Examples of the non-terephthalic-acid dicarboxylic acid in the dicarboxylic acid component include: aromatic dicarboxylic acids such as isophthalic acid, diphenyl-4,4'-dicarboxylic acid, diphenoxyethane dicarboxylic acid, 2,6-naphthalene dicarboxylic acid and 2,7-naphthalene dicarboxylic acid and ester forming derivatives thereof; aliphatic dicarboxylic acids such as adipic acid, sebacic acid, azelaic acid and succinic acid and ester forming derivatives thereof; alicyclic dicarboxylic acids such as cyclohexanedicarboxylic acid and hexahydroterephthalic acid and ester forming derivatives thereof; oxy acids such as p-oxybenzoic acid and oxycaproic acid and ester forming derivatives thereof; and trimellitic acid, pyromellitic acid and the like. These may be used either alone or in combination. In consideration of the processability, strength, costs and the like, isophthalic acid is preferably used.

The copolymerization ratio of the non-terephthalic-acid dicarboxylic acid in the dicarboxylic acid component is preferably set in a range of 0 to 40 mol%, more preferably 2 to 40 mol%, particularly preferably 12 to 40 mol%, based on the overall amount of the dicarboxylic acid component. If the copolymerization ratio of the non-terephthalic-acid dicarboxylic acid is excessively small, it is impossible to create the effect of sufficiently improving the interlayer adhesion by the disturbance of the crystallinity of the PET resin. If the copolymerization ratio of the non-terephthalic-acid dicarboxylic acid is excessively great, the specific PET resin tends to have lower heat resistance, making it difficult to form the layer (A) consisting primarily of the specific PET resin.

Ethylene glycol is primarily used as the diol component. The diol component may include ethylene glycol alone. Exemplary diols to be used in combination with ethylene glycol include: aliphatic glycols such as diethylene glycol, trimethylene glycol, tetramethylene glycol and neopentyl glycol; alicyclic glycols such as 1,4-cyclohexanedimethanol; aromatic glycols such as bisphenol-A and alkylene oxide adducts of bisphenol-A; polyalkylene glycols such as polyethylene glycols, polypropylene glycols and polytetramethylene glycols; and glycerin, 1,3-propanediol, pentaerythritol and the like. These may be used either alone or in combination. Diethylene glycol is generated through a side reaction in the production of ethylene glycol and, therefore, is generally contained in a small amount in ethylene glycol. For heat resistance, ethylene glycol is preferably used alone as the diol component, which may contain a small amount of diethylene glycol generated as a side product.

The specific PET resin is basically produced by a common polyester resin production process by using a dicarboxylic acid component primarily including terephthalic acid and the diol component primarily including ethylene glycol.

Exemplary production processes include: a direct polymerization process in which a dicarboxylic acid component primarily including terephthalic acid and a diol component primarily including ethylene glycol are subjected to esterification in an esterification reaction vessel and then the resulting esterification reaction product is transferred into a polycondensation reaction vessel and subjected to polycondensation; and an ester interchange process in which a dicarboxylic acid component primarily including a terephthalate forming derivative and a diol component primarily including ethylene glycol are subjected to an ester interchange reaction in an ester interchange reaction vessel and then the resulting ester interchange reaction product is transferred into a polycondensation reaction vessel and subjected to polycondensation. These reactions may be allowed to proceed in a batch process or in a sequential process. The non-terephthalic-acid dicarboxylic acid may be added at any time before the completion of the esterification reaction or the ester interchange reaction. For easy handling, the non-terephthalic-acid dicarboxylic acid is preferably added as a slurry prepared with the use of ethylene glycol.

In general, a resin prepared through the polycondensation reaction is extracted in a strand form from an extraction port provided at the bottom of the polycondensation reaction vessel, and subjected to water cooling, during or after which the resulting strands are cut into pellets by a cutter. After the polycondensation, the pellets are heat-treated to be further polymerized to a higher polymerization degree in a solid phase. At the same time, the amount of acetaldehyde and lower molecular weight oligomers generated as side reaction products can be reduced.

In the production processes, the esterification reaction is allowed to proceed, for example, at a temperature of about 200°C to about 270°C at a pressure of about $1\times10^5$ to about $4\times10^5$ Pa, as required, with the use of an esterification

catalyst such as diantimony trioxide, or an organic acid salt or an alcoholate of antimony, titanium, magnesium or calcium, and the ester interchange reaction is allowed to proceed, for example, at a temperature of about 200°C to about 270°C at a pressure of about $1\times10^5$ to about $4\times10^5$ Pa, as required, with the use of an ester interchange catalyst such as an organic acid salt of lithium, sodium, potassium, magnesium, calcium, manganese, titanium or zinc.

The polycondensation reaction is allowed to proceed, for example, at a temperature of about 240°C to about 290°C at a reduced pressure on the order of about $1\times10^2$ to about $2\times10^3$ Pa, for example, by using a phosphorus compound such as orthophosphoric acid, phosphorous acid or an ester of any of these acids as a stabilizer, and using a metal oxide such as diantimony trioxide, germanium dioxide or germanium tetraoxide, or an organic acid salt or an alcoholate of antimony, germanium, zinc, titanium, cobalt or an alkali earth metal as a polycondensation catalyst.

The specific PET resin may be subjected to the solid-phase polymerization following the polycondensation reaction. The resin is preliminarily crystallized by heating at a temperature of about 120°C to about 200°C for 1 minute or longer, and then further polymerized at a temperature of about 180°C to a melting point minus about 5°C in an atmosphere of an inert gas such as nitrogen gas and/or at a reduced pressure on the order of about $1\times10^2$ to about $2\times10^3$ Pa.

The intrinsic viscosity of the specific PET resin is preferably in a range of not lower than 0.60 dl/g and not higher than 1.20 dl/g. Where the specific PET resin has an intrinsic viscosity falling within this range, the multilayer structure can be provided as having excellent strength and formability. If the intrinsic viscosity of the PET resin is lower than 0.60 dl/g, the strength is reduced. If the intrinsic viscosity is higher than 1.20 dl/g, the formability is reduced. It is more preferred that the intrinsic viscosity of the specific PET resin is in a range of not lower than 0.60 dl/g and not higher than 1.00 dl/g.

As required, the layer (A) material primarily containing the specific PET resin may further contain additives such as a pigment dispersant, a tackifier, a fluidity improving agent, a surfactant, a defoaming agent, a release agent, a penetrating agent, a dye, a pigment, a fluorescent brightening agent, a UV absorber, an antioxidant, an antiseptic agent and an antifungal agent blended in addition to the specific PET resin.

Exemplary methods for blending the ingredients include a method utilizing a tumbler or a Henschel mixer, and a method in which the ingredients are quantitatively fed into an extruder hopper by a feeder and then mixed. The ingredients may be kneaded with the use of a single screw extruder, a twin screw extruder or the like.

Next, the properties of the layer (A) consisting primarily of the specific PET resin will be described.

<Properties of layer (A) consisting primarily of specific PET resin>

The thickness of the layer (A) is not particularly limited, but typically 0.1 to 800 μm, particularly 0.1 to 500 μm, preferably 0.1 to 300 μm. If the thickness of the layer (A) is excessively great, the multilayer structure tends to have reduced flexibility. If the thickness is excessively small, on the other hand, the multilayer structure tends to have poorer strength, making it difficult for various formed products to maintain their shapes.

Next, the layer (B) consisting primarily of the PVA resin will be described.

<Layer (B) consisting primarily of PVA resin>

As in the features (x) and (y), the layer (B) consisting primarily of the PVA resin in the feature (z) is formed from a material primarily containing the specific PVA resin having a structural unit represented by the following general formula (1), for example, by melt forming:

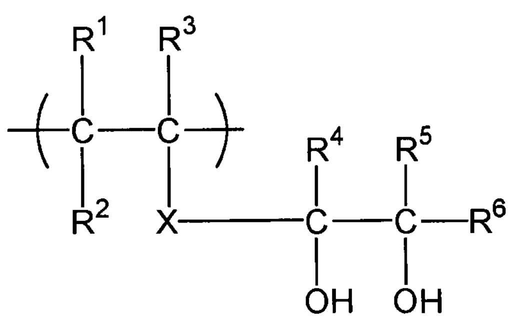

..... (1)

(wherein $R^1$, $R^2$ and $R^3$ each independently represent a hydrogen atom or an organic group; X represents a single bond or a bond chain; and $R^4$, $R^5$ and $R^6$ each independently represent a hydrogen atom or an organic group).

As described above, the specific PVA resin features that it has the structural unit represented by the general formula (1), i.e. , a 1,2-diol structural unit. Like an ordinary PVA resin, the specific PVA resin further has a vinyl alcohol structural unit and a vinyl acetate structural unit, and the proportions of these structural units are properly controlled by

the saponification degree.

First, the structural unit represented by the above general formula (1) will be described. In the 1,2-diol structural unit represented by the above general formula (1), $R^1$ to $R^3$ and $R^4$ to $R^6$, which may be the same or different in the formula (1), are each a hydrogen atom or a monovalent organic group as in the features (x) and (y). For the copolymerization reaction of the monomers and the industrial handling ease in the production process, it is particularly preferred that $R^1$ to $R^3$ and $R^4$ to $R^6$ are all hydrogen atoms. As long as the properties of the resin are not significantly impaired, at least one of $R^1$ to $R^3$ and $R^4$ to $R^6$ may be an organic group. The organic group is not particularly limited, and preferred examples of the organic group include $C_1$ to $C_4$ alkyl groups such as a methyl group, an ethyl group, a n-propyl group, an isopropyl group, a n-butyl group, an isobutyl group and a tert-butyl group. As required, the organic group may have a substituent such as a halogen group, a hydroxyl group, an ester group, a carboxylic group or a sulfonic group.

In the 1, 2-diol structural unit represented by the above general formula (1), X in the formula (1) is preferably a single bond, because the resulting PVA has excellent thermal stability and is free from excessive reduction in crystallinity and deterioration in melt fluidity. The expression "X is a single bond" means that X per se serves as a bonding link.

As long as the effects of the present invention are not impaired, X may be any of various bonding chains. Examples of the bonding chains include hydrocarbon groups such as alkylenes, alkenylenes, alkynylenes, phenylene and naphthylene (which may be substituted with a halogen such as fluorine, chlorine or bromine), -O-, $-(CH_2O)_m-$, $-(OCH_2)_m-$, $-(CH_2O)_mCH_2-$, -CO-, -COCO-, $-CO(CH_2)_mCO-$, $-CO(C_6H_4)CO-$, -S-, -CS-, -SO-, $-SO_2-$, -NR-, -CONR-, -NRCO-, -CSNR-, -NRCS-, -NRNR-, $-HPO_4-$, $-Si(OR)_2-$, $-OSi(OR)_2-$, $-OSi(OR)_2O-$, $-Ti(OR)_2-$, $-OTi(OR)_2-$, $-OTi(OR)_2O-$, -Al(OR)-, -OAl(OR)- and -OAl(OR)O-.

In the above bonding chains, Rs which may the same or different are substituents such as a hydrogen atom and alkyl groups, and a repetition number m is a natural number. Among the bonding chains described above, alkylene groups each having not greater than 6 carbon atoms and $-CH_2OCH_2-$ are preferred for stability in the production process or during use.

In the feature (z), therefore, a PVA resin having a 1, 2-diol structural unit represented by the following formula (1a) is particularly preferably used as the specific PVA resin including the 1,2-diol structural unit represented by the above general formula (1) as in the features (x) and (y):

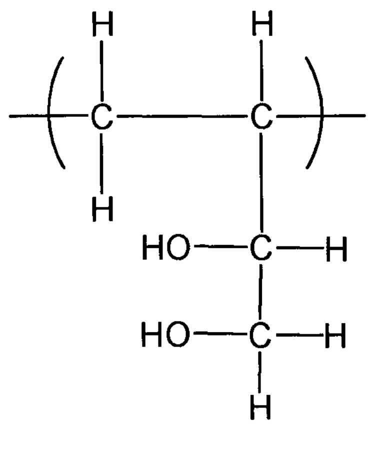

..... (1a)

Exemplary processes for producing the specific PVA resin to be used in the feature (z) include: (α) a process in which a copolymer of vinyl acetate and a 3,4-diacyloxy-1-butene, particularly 3,4-diacetoxy-1-butene, is saponified; (β) a process in which a copolymer of vinyl acetate and vinyl ethylene carbonate is saponified, followed by decarbonation; (γ) a process in which a copolymer of vinyl acetate and a 2,2-dialkyl-4-vinyl-l,3-dioxolane is saponified, followed by deketalization; and (δ) a process in which a copolymer of vinyl acetate and glycerin monoallyl ether is saponified. Particularly, the production process (α) is preferably employed in consideration of a production advantage such that the polymerization properly proceeds to easily and evenly introduce the 1,2-diol structural unit into the PVA resin, and the properties of the finally obtained PVA resin.

The average polymerization degree of the specific PVA resin thus prepared (as measured in conformity with JIS K 6726) is typically 200 to 2000, particularly 250 to 1000, preferably 300 to 600. If the average polymerization degree is excessively low, the PVA resin layer tends to be brittle. If the average polymerization degree is excessively high, on the other hand, the PVA resin tends to have lower fluidity, for example, when the layer is melt-formed. This makes it difficult to form a layer having a desired thickness.

The saponification degree of the specific PVA resin is typically 80 to 100 mol%, particularly 85 to 99.9 mol%, preferably 88 to 99.9 mol%. If the saponification degree is excessively low, a long-run property (long-term operation stability during the melt forming) tends to be deteriorated, and an acetic acid odor is liable to emanate. In the present

invention, the saponification degree is defined as the ratio (mol%) of the amount of the converted hydroxyl groups to the amount of the ester portion of the vinyl ester monomer.

The saponification for the specific PVA resin may be achieved, for example, in the following manner. Typically, the PVA resin is dissolved in an alcohol solvent, and then saponified in the presence of an alkali catalyst or an acid catalyst.

Usable examples of the alcohol solvent include methanol, ethanol, butanol, isopropanol, and various alcohol/methyl acetate solvent mixtures such as a methanol/methyl acetate solvent mixture. The concentration of the PVA resin in the alcohol solvent is preferably selected from a range of 10 to 60 wt%.

Usable examples of the alkali catalyst include hydroxides and alcoholates of alkali metals such as sodium hydroxide, potassium hydroxide, sodium methylate, sodium ethylate and potassium methylate. Usable examples of the acid catalyst include aqueous solutions of inorganic acids such as hydrochloric acid and sulfuric acid, and organic acids such as p-toluenesulfonic acid. The amount of the alkali catalyst to be used is 1 to 100 mmol, particularly 1 to 40 mmol, preferably 1 to 20 mmol, per 1 mol of the vinyl acetate structural unit of the PVA resin. If the use amount of the alkali catalyst is excessively small, it is difficult to increase the saponification degree to an intended level. It is not preferred to use an excessively great amount of the alkali catalyst, because the saponification degree tends to become much higher than the intended level with difficulty in control. In general, the saponification temperature is preferably, for example, 10°C to 70°C, more preferably 20°C to 50°C.

The amount of 1,2-diol bonds introduced in the specific PVA resin, i.e., the proportion of the 1,2-diol structural unit represented by the above general formula (1) (modification degree), is typically 0.1 to 12 mol%, particularly 1 to 10 mol%, preferably 3 to 8 mol%. If the proportion (modification degree) is excessively low, the melting point tends to be higher, thereby deteriorating the formability. If the proportion (modification degree) is excessively high, it is difficult to increase the polymerization degree in the production process, thereby reducing the productivity.

The specific PVA resin described above may be used alone, or may be used in combination with other PVA resin, as long as the properties (particularly the melt formability) are not impaired.

Examples of the other PVA resin include an unmodified PVA resin (having a polymerization degree of 300 to 500 and a saponification degree of 80 mol% or higher), a carboxylic acid modified PVA resin, an acetal modified PVA resin, an amide modified PVA resin, a vinyl ether modified PVA resin, an $\alpha$-olefin (e.g., ethylene) modified PVA resin, a vinyl ester modified PVA resin, an amine modified PVA resin and an oxyalkylene modified PVA resin. As required, any of these may be blended, for example, in a proportion of 0 to 40 wt% based on the total amount of the PVA resins.

In the feature (z), as described above, the material primarily containing the specific PVA resin having the structural unit represented by the above general formula (1) is used as the layer (B) material. More specifically, the specific PVA resin preferably accounts for not less than 50 wt% of the layer (B) material.

For improvement in interlayer adhesion and melt formability, it is preferred to blend at least one of an alkali metal salt and an alkali earth metal salt in the layer (B) material. Examples of the alkali metal salt include potassium and sodium metal salts of organic acids such as acetic acid, propionic acid, butyric acid, lauric acid, stearic acid, 12-hydroxystearic acid, oleic acid and behenic acid, and inorganic acids such as sulfuric acid, sulfurous acid, carbonic acid and phosphoric acid. Examples of the alkali earth metal salt include calcium and magnesium metal salts of organic acids such as acetic acid, propionic acid, butyric acid, lauric acid, stearic acid, oleic acid and behenic acid, and inorganic acids such as sulfuric acid, sulfurous acid, carbonic acid and phosphoric acid. These may be used either alone or in combination. Particularly, sodium acetate as the alkali metal salt and magnesium acetate as the alkali earth metal salt are preferably used either alone or in combination in consideration of the magnitude of the effect for the blend amount.

At least one of the alkali metal salt and the alkali earth metal salt is typically blended in an amount of 0.001 to 1 mol%, particularly 0.002 to 0.8 mol%, preferably 0.01 to 0.5 mol%, based on the total amount of the structural units of the PVA resin. If the amount of the metal salt is excessively small, it is difficult to create the effect of further improving the interlayer adhesion. If the amount is excessively great, on the other hand, the resulting resin is liable to be colored, and the resulting multilayer structure tends to have a poorer appearance due to foaming attributable to thermal decomposition.

The layer (B) material may contain other ingredient in addition to the specific PVA resin and the metal salt. Examples of the other ingredient include: plasticizers including aliphatic polyvalent alcohols such as glycerin, ethylene glycol and hexanediol, ethylene oxide adducts of these polyvalent alcohols, and sugar alcohols such as sorbitol, mannitol and pentaerythritol; lubricants including saturated aliphatic amide compounds such as stearamide and ethylene bisstearamide, unsaturated aliphatic amide compounds such as oleamide, aliphatic metal salts such as calcium stearate, magnesium stearate and zinc stearate, and lower molecular weight polyolefins such as lower molecular weight ethylene and lower molecular weight propylene each having a molecular weight of about 500 to about 10000; inorganic acids such as boric acid and phosphoric acid; and antioxidants, heat stabilizers, light stabilizers, UV absorbers, colorants, antistatic agents, surfactants, antiseptic agents, antibiotic agents, antiblocking agents, slip agents and fillers, which may be blended as required.

The layer (B) material is prepared, for example, in the following manner: by preparing the specific PVA resin, and then blending any of the aforementioned ingredients in the specific PVA resin as required.

The properties of the layer (B) consisting primarily of the PVA resin will be described.

<Properties of layer (B) consisting primarily of PVA resin>

The thickness of the layer (B) consisting primarily of the PVA resin is typically 0.1 to 500 μm, particularly 0.3 to 300 μm, preferably 0.5 to 100 μm. If the thickness of the layer (B) is excessively great, the resulting multilayer structure is less flexible with higher rigidity and, therefore, tends to have lower impact resistance. If the thickness is excessively small, on the other hand, the resulting multilayer structure tends to fail to exhibit a sufficient barrier property.

<<Multilayer structure>>

Next, the inventive multilayer structure produced by using the layer (A) material and the layer (B) material according to the features (x) to (z) will be described.

The inventive multilayer structure is configured such that the layer (B) consisting primarily of the PVA resin having the specific structural unit is provided in stacked adjacent relation to the layer (A) consisting primarily of the specific PET resin. Where the multilayer structure is used as a material for forming various products, the multilayer structure preferably has a three-layer structure of layer (A)/layer (B)/layer (A), or a layered structure such as layer (A)/layer (B)/layer (A)/layer (B)/layer (A) or layer (A)/layer (B)/layer (A)/layer (B)/layer (A)/layer (B)/layer (A), which is produced by alternately stacking the layer (A) and the layer (B). Where the multilayer structure is used in an application requiring the barrier property or the like, the opposite surface portions of the multilayer structure are preferably made of the layer (A).

The thickness ratio between the layer (A) and the layer (B) (layer (A)/layer (B)) is typically 30/70 to 95/5, particularly, 40/60 to 90/10, preferably 50/50 to 80/20. If the thickness of the layer (A) is much smaller than the thickness of the layer (B), the resulting multilayer structure tends to have insufficient strength.

The layered structure of the inventive multilayer structure may include other layer in addition to the layer (A) and the layer (B) depending on the purpose and the application. Examples of the other layer include a woven fabric made of any of various thermoplastic resins, a mesh, a wire mesh and a paper sheet.

<<multilayer structure production process>>

Next, a process for producing the inventive multilayer structure will be described.

Exemplary processes for producing the inventive multilayer structure include a co-extrusion process and a co-injection process in which the layer (A) material and the layer (B) material are prepared and then melt-formed. Particularly, the co-extrusion process is preferred for production of multilayer films and multilayer sheets. Specific known examples of the co-extrusion process include a multi-manifold die process, a feed block process, a multi-slot die process, and a die external adhesion process. A T-die or a round-die may be used as a die for the co-extrusion process.

The co-injection process is preferably used for production of bottles, cups, trays and the like. For the production of bottles, a co-injection two-axis stretch blow-molding process is particularly preferred from the viewpoint of the productivity.

The co-injection two-axis stretch blow-molding process will hereinafter be described in detail.

In the co-injection two-axis stretch blow-molding process, a parison (also referred to as "container precursor" or "preform") of a three-layer structure of layer (A)/layer (B)/layer (A) which at least includes an intermediate layer (B) consisting primarily of the specific PVA resin and layers (A) provided on opposite sides of the layer (B) and consisting primarily of the specific PET resin is first prepared by the co-injection process. Then, the parison is heated, mechanically vertically stretched and, simultaneously with or subsequently to the vertical stretching, circumferentially expanded by blowing a compressed air, while being kept at a constant temperature within a blow mold.

In general, an injection molding machine having two injection cylinders and a multi-manifold system is employed for the preparation of the parison having the multilayer structure. The layer (A) material and the layer (B) material are melted and injected into the single mold from the respective injection cylinders through the multi-manifold system simultaneously or in a time staggered manner.

For example, a bottomed parison having the three-layer structure of layer (A) /layer (B) /layer (A) with the intermediate layer (B) sandwiched between the layers (A) is produced by first injecting the outer layer (A) material, then injecting a predetermined amount of the intermediate layer (B) material, and continuously injecting the layer (A) material.

As for conditions for the injection molding of the parison, the inj ection-molding temperature of the layer (B) material is typically 150°C to 300°C, preferably 160°C to 270°C, particularly preferably 170°C to 230°C. If the injection-molding temperature is excessively low, the layer (B) material is insufficiently melted. If the injection-molding temperature is excessively high, on the other hand, the two-axially stretched blow-molded bottle tends to have a poorer appearance due to thermal decomposition of the layer (B) material and to emanate a remarkable odor.

On the other hand, the injection-molding temperature of the layer (A) material is typically 230°C to 350°C, preferably 250°C to 330°C, particularly preferably 270°C to 310°C. If the injection-molding temperature is excessively low, the layer (A) material is insufficiently melted. If the injection-molding temperature is excessively high, on the other hand, the two-axially stretched blow-molded bottle tends to have a poorer appearance due to thermal decomposition of the layer (A) material and to emanate a remarkable odor.

The temperature of the multi-manifold portion in which the layer(A) material and the layer(B) material are merged is typically 230°C to 350°C, preferably 250°C to 330°C, particularly preferably 270°C to 310°C. If the temperature is excessively low, the layer (A) material is insufficiently melted. If the temperature is excessively high, on the other hand, the two-axially stretched blow-molded bottle tends to have a poorer appearance due to thermal decomposition of the layer (A) material and the layer (B) material and to emanate a remarkable odor.

The temperature of the mold into which the layer (A) material and the layer (B) material are injected is typically 0°C to 80°C, preferably 5°C to 60°C, particularly preferably 10°C to 30°C. If the temperature is excessively low, water condensation is liable to occur on the mold, so that the resulting parison and the two-axially stretched blow-molded bottle tend to each have a poorer appearance. If the temperature is excessively high, on the other hand, the resulting parison tends to have poorer blow-moldability, and the resulting two-axially stretched blow-molded bottle tends to have lower transparency.

Thus, the parison having the multilayer structure is produced. Then, the parison is mechanically vertically stretched with or without reheating and, simultaneously with or subsequently to the vertical stretching, circumferentially expanded by blowing compressed air, while being kept at the constant temperature in the blow mold. Thus, the intended two-axially stretched blow-molded bottle is provided.

There are a hot parison method in which the parison prepared by the injection molding is subjected to a reheating step in a hot state for the blow molding, and a cold parison method in which the parison prepared by the injection molding is stored at a room temperature for a predetermined period and then subjected to the reheating step for the blow molding. These methods are employed according to the purpose. In general, the cold parison method is preferably employed for higher productivity.

For the reheating of the parison, a heater such as an infrared heater or a block heater is used. The temperature of the heated parison is typically 80°C to 140°C, preferably 85°C to 130°C, particularly preferably 90°C to 120°C. If the temperature is excessively low, the resulting multilayer container tends to be unevenly shaped with an uneven thickness because of uneven stretching. If the temperature is excessively high, on the other hand, the crystallization of the layer (A) material is promoted, resulting in whitening of the resulting multilayer container.

Then, the reheated parison is two-axially stretched. Thus, the intended two-axially stretched blow-molded bottle is provided. In general, the parison is mechanically stretched vertically about one to seven times by means of a plug, a rod and the like, and then pneumatically stretched horizontally about one to seven times, whereby the intended two-axially stretched blow-molded bottle is provided. The vertical stretching and the horizontal stretching may be simultaneously or sequentially carried out. The vertical stretching may be achieved by employing the pneumatic stretching in combination with the mechanical stretching.

<<Applications of Present Invention>>

The inventive multilayer structure is suitable for applications to various packaging materials such as food packaging materials, medical drug packaging materials, industrial agent packaging materials and agricultural agent packaging materials, and various container materials. Particularly, the inventive multilayer structure is advantageously employed for container materials which take advantage of its characteristic properties. Further, the PVA resin for the layer (B) of the inventive multilayer structure is highly soluble in water. Therefore, the PET resin can be easily recovered by cutting the multilayer structure and rinsing the cut multilayer structure with water. Thus, the inventive multilayer structure is excellent in recyclability.

## EXAMPLES

The present invention will hereinafter be described by way of examples thereof. However, the present invention is not limited to these examples, but various modifications may be made within the scope of the invention. In the following examples, "parts" and "%" are based on weight, unless otherwise specified.

<<Examples according to feature (x)>>

<Preparation of materials>

<Layer(A) material>

The production of the specific PET resin, and the measurement and the evaluation of the physical properties of the PET resin were carried out in the following manner.

(1) Intrinsic viscosity (IV)

About 0.25 g of a PET resin sample was dissolved in about 25 ml of a phenol/1,1,2,2-tetrachloroethane solvent mixture (weight ratio of 1/1) to provide a solution having a concentration of 1.00 g/dL, and then the solution was cooled to and kept at 30°C. Then, the number of seconds required for the sample solution to drop and the number of seconds required for the solvent mixture to drop were measured by means of a full-automatic solution viscometer (2CH MODEL DT504 produced by Chuo Rika Kogyo Corporation). The intrinsic viscosity (IV) was calculated from the following expression (2):

$$IV = ((1 + 4KH \cdot \eta sp)^{0.5} - 1)/(2KH \cdot C) \quad .....(2)$$

wherein $\eta sp = \eta/\eta 0 - 1$, $\eta$ is the number of seconds required for the sample solution to drop, $\eta 0$ is the number of seconds required for the solvent mixture to drop, C is the concentration (g/dL) of the sample solution, and KH is Huggins constant (KH is herein 0. 33) . Conditions for the dissolution of the sample were 110 °C and 30 minutes.

(2) Terminal carboxyl group concentration (AV)

The PET resin sample was ground, then dried at 140°C for 15 minutes by means of a hot air drier and cooled to a room temperature in a desiccator. Then, 0.1 g of the cooled sample was precisely weighed out in a test tube, and dissolved in 3 mL of benzyl alcohol added in the test tube at 195°C for 3 minutes while dry nitrogen gas was blown into the test tube. Thereafter, 5 mL of chloroform was gradually added into the test tube, and the resulting solution was cooled to a room temperature. One or two droplets of Phenol Red indicator were added to the resulting solution, and the solution was titrated with a benzyl alcohol solution of 0. 1 N sodium hydroxide with stirring while dry nitrogen gas was blown into the test tube. The titration was completed when the color of the solution was changed from yellow to red. Blank titration was carried out in the same manner without the use of the PET resin sample. The terminal carboxyl group concentration (AV) was calculated from the following expression:

$$AV \text{ (equivalents/ton)} = (A - B) \times 0.1 \times f/W$$

wherein A is the amount (μL) of the benzyl alcohol solution of 0.1 N sodium hydroxide required for the titration of the sample, B is the amount (μL) of the benzyl alcohol solution of 0.1 N sodium hydroxide required for the blank titration, W is the amount (g) of the PET resin sample, and f is the titer of the benzyl alcohol solution of 0.1 N sodium hydroxide.

The titer (f) of the benzyl alcohol solution of 0.1 N sodium hydroxide was determined by putting 5 mL of methanol in a test tube, adding one or two droplets of a Phenol Red ethanol solution as an indicator into the test tube, titrating the resulting solution with 0.4 mL of a benzyl alcohol solution of 0.1 N sodium hydroxide to a color change point, adding 0.2 mL of a 0.1 N hydrochloric acid aqueous solution having a known titer as a reference liquid, and titrating the resulting solution again with the benzyl alcohol solution of 0.1 N sodium hydroxide to a color change point (this operation was performed while dry nitrogen gas was blown into the test tube).

The titer (f) was calculated from the following expression:

Titer (f) = Titer of 0.1 N hydrochloric acid aqueous solution × Amount (μL) of 0.1 N hydrochloric acid aqueous solution/Amount (μL) of benzyl alcohol solution of 0.1 N sodium hydroxide required for titration

(1) Preparation of PET resin (IS654)

A PET resin which contained a dicarboxylic acid component including terephthalic acid and isophthalic acid and having an isophthalic acid copolymerization ratio of 30.0 mol% based on the overall amount of the dicarboxylic acid component and a diol component including ethylene glycol was prepared in the following manner.

First, 34.9 kg of dimethyl terephthalate (hereinafter sometimes abbreviated as "DMT"), 14. 9 kg of dimethyl isophthalate (hereinafter sometimes abbreviated as "DMI") and 35.4 kg of ethylene glycol (hereinafter sometimes abbreviated as "EG") were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 240 ppm by weight of an antimony trioxide catalyst and 350 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. Thus, a PET resin (IS654) was prepared which had an AV value of 33 equivalents/ton and an intrinsic viscosity of 0.72.

(2) Preparation of PET resin (IG395Z)

A PET resin which contained a dicarboxylic acid component including terephthalic acid and isophthalic acid and having an isophthalic acid copolymerization ratio of 15.0 mol% based on the overall amount of the dicarboxylic acid component and a diol component including ethylene glycol was prepared in the following manner.

First, 42.3 kg of DMT, 7.5 kg of DMI and 35.4 kg of EG were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 150 ppm by weight of a germanium dioxide catalyst and 240 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 6 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 195°C for 10 hours in a nitrogen stream in an inert oven (INERT OVEN IPHH201 produced by TABAI ESPEC Corporation). Thus, a PET resin (IG395Z) was prepared which had an AV value of 28 equivalents/ton and an intrinsic viscosity of 0.70.

(3) Preparation of PET resin (IG229Z)

A PET resin which contained a dicarboxylic acid component including terephthalic acid and isophthalic acid and having an isophthalic acid copolymerization ratio of 12.0 mol% based on the overall amount of the dicarboxylic acid component and a diol component including ethylene glycol was prepared in the following manner.

First, 43.8 kg of DMT, 6.0 kg of DMI and 35.4 kg of EG were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was

removed. After the completion of the ester interchange reaction, 150 ppm by weight of a germanium dioxide catalyst and 240 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 195°C for 24 hours in a nitrogen stream in an inert oven (INERT OVEN IPHH201 produced by TABAI ESPEC Corporation). Thus, a PET resin (IG229Z) was prepared which had an AV value of 12 equivalents/ton and an intrinsic viscosity of 0.96.

(4) Preparation of PET resin (GG500)

A PET resin which contained a dicarboxylic acid component including terephthalic acid alone and a diol component including ethylene glycol was prepared in the following manner.

First, 49.8 kg of DMT and 33.1 kg of EG were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 150 ppm by weight of a germanium dioxide catalyst and 240 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 6 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 215°C for 10 hours in a nitrogen stream in an inert oven (INERT OVEN IPHH201 produced by TABAI ESPEC Corporation) . Thus, a PET resin (GG500) was prepared which had an AV value of 10 equivalents/ton and an intrinsic viscosity of 0.77.

<Layer (B) material>

(1) Preparation of PVA resin (B1-x)

First, 305.0 g of vinyl acetate, 219.8 g of methanol and 19.2 g of 3, 4-diacetoxy-1-butene were fed into a reaction can provided with a reflux condenser, a dropping funnel and a stirrer, and then 37.8 g of a methanol solution of 4 % t-butyl peroxyneodecanoate (having a half life of 102 minutes) was added to the resulting mixture in 610 minutes in a nitrogen gas stream with stirring and heating for polymerization. After a lapse of 30 minutes from the start of the polymerization, 480 g of vinyl acetate and 28.8 g of 3,4-diacetoxy-1-butene were added to the resulting mixture in 420 minutes and further subjected to polymerization for 105 minutes. When the polymerization percentage of vinyl acetate reached 89.5 %, 38 ppm of p-methoxyphenol (based on the fed vinyl acetate amount) was added as a polymerization inhibitor to end the polymerization. Subsequently, unreacted vinyl acetate monomers were expelled outside the system by blowing methanol vapor, whereby a methanol solution of a copolymer was prepared.

In turn, the solution was diluted with methanol to a copolymer concentration of 66 %, and fed into a kneader. Then, the solution was subjected to saponification by adding a methanol solution of 2 % sodium hydroxide in a proportion of 12 mmol per 1 mol of the total of vinyl acetate and 3,4-diacetoxy-1-butene in the copolymer while keeping the solution temperature at 40°C. During the saponification, a saponification product was precipitated to form a slurry. Thereafter, 1 equivalent of acetic acid based on the added sodium hydroxide amount was added to the slurry, and methanol was added to the slurry to adjust the resin concentration of the slurry at 9 %. Then, the resulting slurry was stirred in the kneader for 15 minutes, and the resulting product was filtered out and dried in a hot air drier. Then, the product was dispersed again in methanol with stirring, and filtered out. Thus, a PVA resin (B1-x) was prepared.

The saponification degree of the PVA resin (B1-x) thus prepared was 98.8 mol% as determined through an analysis based on an alkali consumption required for the hydrolysis of the remaining vinyl acetate and the remaining 3,4-diacetoxy-1-butene. The average polymerization degree was 450 as determined through an analysis performed in conformity with JIS K6726. The amount of the 1,2-diol structure introduced into side chains was 3 mol% as determined based on measurement of $^1$H-NMR spectrum (using DMSO-d6 as a solvent and tetramethylsilane as an internal standard). The amount of sodium acetate which was a side product of the saponification reaction and was not removed by the rinsing with methanol was 0.02 mol%.

(2) Preparation of PVA resin (B2-x)

First, 0.039 mol% of magnesium acetate ($Mg(Ac)_2$) based on the total amount of the structural units of the PVA resin (B1-x) was blended with the PVA resin (B1-x), and then the resulting mixture was melt-kneaded at a resin temperature of 210°C by means of a twin screw extruder (KZW-15-60MG produced by Technovel Corporation and having a screw diameter of 15 mm and L/D of 60). Thus, a PVA resin (B2-x) was prepared in a pellet form.

(3) Preparation of PVA resin (B3-x)

First, 0.039 mol% of magnesium acetate ($Mg(Ac)_2$) and 0.17 mol% of sodium acetate (NaAc) based on the total amount of the structural units of the PVA resin (B1-x) were blended with the PVA resin (B1-x), and then the resulting mixture was melt-kneaded at a resin temperature of 210°C by means of a twin screw extruder (KZW-15-60MG produced by Technovel Corporation and having a screw diameter of 15 mm and L/D of 60) . Thus, a PVA resin (B3-x) was prepared in a pellet form.

Example 1

<Three-layer structure including layers (A) and layer (B) >

The PET resin (IS654) and the PVA resin (B1-x) were used as the layer (A) material and the layer (B) material, respectively, and a laminate (film) having a three-layer structure of layer (A) /layer (B) /layer (A) (having a total thickness of 100 μm) including a 40-μm thick layer (A), a 20-μm thick layer (B) and a 40-μm thick layer (A) was produced by means of a melt-extruder having a two-type three-layer T-die.

The resin temperature of the PET resin was 260°C to 280°C, and the resin temperature of the PVA resin was 240°C. The PET resin and the PVA resin were extruded at a die temperature of 260°C, and an extruded multilayer resin film was cooled by a 40°C roll. Thus, the multilayer structure was produced.

<Delamination resistance (T-peel)>

The peel strength between the layer (A) and the layer (B) of the three-layer structure (film) thus produced was measured under the following conditions, and the results are shown below in Table 1. Sample: having a width of 15 mm and a length of 200 mm Device: Autograph AG-100 produced by Shimadzu Corporation
Measurement method: T-peel method (n=5)
Peeling rate: 100 mm/min

Example 2

A three-layer structure was produced in substantially the same manner as in Example 1, except that the aforementioned G395Z (having an AV value of 28) having an isophthalic acid copolymerization ratio of 15.0 mol% was used as the PET resin for the layer (A) material. Then, the three-layer structure was evaluated in the same manner as in Example 1. The results are shown below in Table 1.

Comparative Example 1

A three-layer structure was produced in substantially the same manner as in Example 1, except that the aforementioned G229Z (having an AV value of 12) having an isophthalic acid copolymerization ratio of 12.0 mol% was used as the PET resin for the layer (A) material. Then, the three-layer structure was evaluated in the same manner as in Example 1. The results are shown below in Table 1.

Comparative Example 2

A three-layer structure was produced in substantially the same manner as in Example 1, except that the aforementioned GG500 (having an AV value of 10) containing terephthalic acid alone as the dicarboxylic acid component (having an isophthalic acid copolymerization ratio of 0 mol%) was used as the PET resin for the layer (A) material. Then, the three-layer structure was evaluated in the same manner as in Example 1. The results are shown below in Table 1.

Table 1 (according to feature ($_x$))

| | PVA resin | | | | | PET resin | | | Peel strength (mN/mm ) |
|---|---|---|---|---|---|---|---|---|---|
| | Type | Modification amount (mol%) | $Mg(Ac)_2$ (mol%) | NaAc (mol%) | Total amount | Type | Copolymerization ratio (mol%) * | AV value | |
| Example 1 | B1-x | 3.0 | 0.0 | 0.02 | 0.02 | IS654 | 30.0 | 33 | 18 |
| Example 2 | B1-x | 3.0 | 0.0 | 0.02 | 0.02 | IG395Z | 15.0 | 28 | 11 |
| Comparative Example 1 | B1-x | 3.0 | 0.0 | 0.02 | 0.02 | IG229Z | 12.0 | 12 | 5 |
| Comparative Example 2 | B1-x | 3.0 | 0.0 | 0.02 | 0.02 | GG500 | 0 | 10 | 7 |

* Copolymerization ratio (feed amount for polymerization) of non-terephthalic-acid dicarboxylic acid in dicarboxylic acid component.

The above results indicate that the inventive examples were excellent in interlayer adhesion.

In Comparative Examples 1 and 2, corresponding to Examples 1 and 2, in which the isophthalic acid copolymerization ratio was lower on the order of 12.0 mol% or the dicarboxylic acid component contained terephthalic acid alone, the layers (A) each significantly contracted without reduction in crystallinity by the disturbance of the crystallinity. As a result, the delamination resistance was poorer with lower T-peel values.

Example 3

A three-layer structure was produced in substantially the same manner as in Example 1, except that the PVA resin (B2-x) was used as the PVA resin for the layer (B) material. Then, the three-layer structure was evaluated in the same manner as in Example 1. The results are shown below in Table 2.

Example 4

A three-layer structure was produced in substantially the same manner as in Example 3, except that a PVA resin (B3) was provided by the PVA resin (B3-x) for use as the PVA resin for the layer (B) material. Then, the three-layer structure was evaluated in the same manner as in Example 3. The results are shown below in Table 2.

Table 2 (according to feature (x))

| | PVA resin | | | | | PET resin | | | Peel strength (mN/cm) |
|---|---|---|---|---|---|---|---|---|---|
| | Type | Modification amount (mol%) | $Mg(Ac)_2$ (mol%) | NaAc (mol%) | Total amount | Type | Copolymerization ratio (mol%) * | AV value | |
| Example 3 | B2-x | 3.0 | 0.039 | 0.02 | 0.059 | IS654 | 30.0 | 33 | 28 |
| Example 4 | B3-x | 3.0 | 0.039 | 0.17 | 0.209 | IS654 | 30.0 | 33 | 31 |

* Copolymerization ratio (feed amount for polymerization) of non-terephthalic-acid dicarboxylic acid in dicarboxylic acid component.

The above results indicate that the multilayer structures were produced as each having excellent interlayer adhesion by blending the alkali metal salt and the alkali earth metal salt in the PVA resin.

<<Examples according to feature (y)>>

<Preparation of materials>

<Layer(A) material>

The production of the specific PET resin, and the measurement and the evaluation of the physical properties of the PET resin were carried out in the following manner.

(1) Intrinsic viscosity (IV)

About 0.25 g of a PET resin sample was dissolved in about 25 ml of a phenol/1,1,2,2-tetrachloroethane solvent mixture (weight ratio of 1/1) to provide a solution having a concentration of 1.00 g/dL, and then the solution was cooled to and kept at 30°C. Then, the number of seconds required for the sample solution to drop and the number of seconds required for the solvent mixture to drop were measured by means of a full-automatic solution viscometer (2CH MODEL DT504 produced by Chuo Rika Kogyo Corporation). The intrinsic viscosity (IV) was calculated from the following expression (2):

$$IV = ((1 + 4KH \cdot \eta sp)^{0.5} - 1)/(2KH \cdot C) \quad .....(2)$$

wherein $\eta sp = \eta/\eta 0 - 1$, $\eta$ is the number of seconds required for the sample solution to drop, $\eta 0$ is the number of seconds required for the solvent mixture to drop, C is the concentration (g/dL) of the sample solution, and KH is Huggins constant (KH is herein 0. 33) . Conditions for the dissolution of the sample were 110 °C and 30 minutes.

(2) Terminal carboxyl group concentration (AV)

The PET resin sample was ground, then dried at 140°C for 15 minutes by means of a hot air drier and cooled to a room temperature in a desiccator. Then, 0.1 g of the cooled sample was precisely weighed out in a test tube, and dissolved in 3 mL of benzyl alcohol added in the test tube at 195°C for 3 minutes while dry nitrogen gas was blown into the test tube. Thereafter, 5 mL of chloroform was gradually added into the test tube, and the resulting solution was cooled to a room temperature. One or two droplets of Phenol Red indicator were added to the resulting solution, and the solution was titrated with a benzyl alcohol solution of 0.1 N sodium hydroxide with stirring while dry nitrogen gas was blown into the test tube. The titration was completed when the color of the solution was changed from yellow to red. Blank titration was carried out in the same manner without the use of the PET resin sample. The terminal carboxyl group concentration (AV) was calculated from the following expression:

$$AV\ (equivalents/ton) = (A - B) \times 0.1 \times f/W$$

wherein A is the amount (μL) of the benzyl alcohol solution of 0.1 N sodium hydroxide required for the titration of the sample, B is the amount (μL) of the benzyl alcohol solution of 0.1 N sodium hydroxide required for the blank titration, W is the amount (g) of the PET resin sample, and f is the titer of the benzyl alcohol solution of 0.1 N sodium hydroxide.

The titer (f) of the benzyl alcohol solution of 0.1 N sodium hydroxide was determined by putting 5 mL of methanol in a test tube, adding one or two droplets of a Phenol Red ethanol solution as an indicator into the test tube, titrating the resulting solution with 0.4 mL of the benzyl alcohol solution of 0.1 N sodium hydroxide to a color change point, adding 0.2 mL of a 0.1 N hydrochloric acid aqueous solution having a known titer as a reference liquid, and titrating the resulting solution again with the benzyl alcohol solution of 0.1 N sodium hydroxide to a color change point (this operation was performed while dry nitrogen gas was blown into the test tube).

The titer (f) was calculated from the following expression:

Titer (f) = Titer of 0.1 N hydrochloric acid aqueous solution × Amount (μL) of 0.1 N hydrochloric acid aqueous solution/Amount (μL) of benzyl alcohol solution of 0.1 N sodium hydroxide required for titration

(1) Preparation of PET resin (IG226S)

A PET resin which contained a dicarboxylic acid component including terephthalic acid and isophthalic acid and having an isophthalic acid copolymerization ratio of 12.0 mol% based on the overall amount of the dicarboxylic acid component and a diol component including ethylene glycol was prepared in the following manner.

First, 43.8 kg of dimethyl terephthalate (hereinafter sometimes abbreviated as "DMT"), 6.0 kg of dimethyl isophthalate (hereinafter sometimes abbreviated as "DMI") and 35.4 kg of ethylene glycol (hereinafter sometimes abbreviated as "EG") were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 150 ppm by weight of a germanium dioxide catalyst and 240 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 195°C for 12 hours in a nitrogen stream in an inert oven (INERT OVEN IPHH201 produced by TABAI ESPEC Corporation). Thus, a PET resin (IG226S) was prepared which had an AV value of 24 equivalents/ton and an intrinsic viscosity of 0.82.

(2) Preparation of PET resin (BK-6180C)

A PET resin which contained a dicarboxylic acid component including terephthalic acid and isophthalic acid and having an isophthalic acid copolymerization ratio of 2.0 mol% based on the overall amount of the dicarboxylic acid component and a diol component including ethylene glycol was prepared in the following manner.

First, 48.8 kg of DMT, 1.0 kg of DMI and 33.1 kg of EG were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 150 ppm by weight of a germanium dioxide catalyst and 240 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 215°C for 20 hours in a nitrogen stream in an inert oven (INERT OVEN IPHH201 produced by TABAI ESPEC Corporation). Thus, a PET resin (BK6180C) was prepared which had an AV value of 8 equivalents/ton and an intrinsic viscosity of 0.83.

(3) Preparation of PET resin (GG500)

Like the PET resin (GG500) used in the example according to the feature (x), a PET resin which contained a dicarboxylic acid component including terephthalic acid alone and a diol component including ethylene glycol was prepared in the following manner.

First, 49.8 kg of DMT and 33.1 kg of EG were fed in a diol/acid molar ratio of 2.2 in a stainless steel autoclave having a stirrer and an extraction tube. Then, 300 ppm by weight of calcium acetate based on the amount of a polyester

to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 150 ppm by weight of a germanium dioxide catalyst and 240 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 6 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 215°C for 10 hours in a nitrogen stream in an inert oven (INERT OVEN IPHH201 produced by TABAI ESPEC Corporation) . Thus, a PET resin (GG500) was prepared which had an AV value of 10 equivalents/ton and an intrinsic viscosity of 0.77.

<Layer (B) material>

(1) Preparation of PVA resin (B1-y)

First, 321.4 g of vinyl acetate, 241.1 g of methanol and 38.6 g of 3, 4-diacetoxy-1-butene were fed into a reaction can provided with a reflux condenser, a dropping funnel and a stirrer, and then 37.8 g of a methanol solution of 4 % t-butyl peroxyneodecanoate (having a half life of 102 minutes) was added to the resulting mixture in 610 minutes in a nitrogen gas stream with stirring and heating for polymerization. After a lapse of 35 minutes from the start of the polymerization, 571.4 g of vinyl acetate and 68.6 g of 3,4-diacetoxy-1-butene were added to the resulting mixture in 480 minutes and further subjected to polymerization for 105 minutes. When the polymerization percentage of vinyl acetate reached 89.5 %, 38 ppm of p-methoxyphenol (based on the fed vinyl acetate amount) was added as a polymerization inhibitor to end the polymerization. Subsequently, unreacted vinyl acetate monomers were expelled outside the system by blowing methanol vapor, whereby a methanol solution of a copolymer was prepared.

In turn, the solution was diluted with methanol to a copolymer concentration of 66 %, and fed into a kneader. Then, the solution was subjected to saponification by adding a methanol solution of 2 % sodium hydroxide in a proportion of 12 mmol per 1 mol of the total of vinyl acetate and 3,4-diacetoxy-1-butene in the copolymer while keeping the solution temperature at 40°C. During the saponification, a saponification product was precipitated to form a slurry. Thereafter, 1 equivalent of acetic acid based on the added sodium hydroxide amount was added to the slurry, and methanol was added to the slurry to adjust the resin concentration of the slurry at 9 %. Then, the resulting slurry was stirred in the kneader for 15 minutes, and the resulting product was filtered out. Then, the product was dispersed again in methanol with stirring, filtered out, and dried in a hot air drier. Thus, a PVA resin was prepared.

The saponification degree of the PVA resin thus prepared was 98.7 mol% as determined through an analysis based on an alkali consumption required for the hydrolysis of the remaining vinyl acetate and the remaining 3,4-diacetoxy-1-butene. The average polymerization degree was 450 as determined through an analysis performed in conformity with JIS K6726. The amount of the 1,2-diol structure introduced into side chains was 6 mol% as determined based on measurement of $^1$H-NMR spectrum (using DMSO-d6 as a solvent and tetramethylsilane as an internal standard). The amount of sodium acetate which was a side product of the saponification reaction and was not removed by the rinsing with methanol was 0.02 mol%.

Then, 0 . 039 mol% of magnesium acetate ($Mg(Ac)_2$) and 0.17 mol% of sodium acetate (NaAc) based on the total amount of the structural units of the PVA resin thus prepared were blended with the PVA resin, and then the resulting mixture was melt-kneaded at a resin temperature of 210°C by means of a twin screw extruder (KZW-15-60MG produced by Technovel Corporation and having a screw diameter of 15 mm and L/D of 60) . Thus, a PVA resin (B1-y) was prepared in a pellet form.

(2) Preparation of PVA resins (B2-y to B8-y)

PVA resins (B2-y to B8-y) were prepared in a pellet form in substantially the same manner as in the preparation of the PVA resin (B1-y), except that the proportions of magnesium acetate and sodium acetate were changed as shown below in Table 3. In the preparation of the PVA resin (B8-y), magnesium stearate was used instead of magnesium acetate.

(3) Preparation of PVA resin (B9-y)

First, 305.0 g of vinyl acetate, 219.8 g of methanol and 19.2 g of 3, 4-diacetoxy-1-butene were fed into a reaction can provided with a reflux condenser, a dropping funnel and a stirrer, and then 37.8 g of a methanol solution of 4 % t-butyl peroxyneodecanoate (having a half life of 102 minutes) was added to the resulting mixture in 610 minutes in a nitrogen gas stream with stirring and heating for polymerization. After a lapse of 30 minutes from the start of the polymerization, 480 g of vinyl acetate and 28.8 g of 3,4-diacetoxy-1-butene were added to the resulting mixture in 420 minutes

and further subjected to polymerization for 105 minutes. When the polymerization percentage of vinyl acetate reached 89.5 %, 38 ppm of p-methoxyphenol (based on the fed vinyl acetate amount) was added as a polymerization inhibitor to end the polymerization. Subsequently, unreacted vinyl acetate monomers were expelled outside the system by blowing methanol vapor, whereby a methanol solution of a copolymer was prepared.

In turn, the solution was diluted with methanol to a copolymer concentration of 66 %, and fed into a kneader. Then, the solution was subjected to saponification by adding a methanol solution of 2 % sodium hydroxide in a proportion of 12 mmol per 1 mol of the total of vinyl acetate and 3,4-diacetoxy-1-butene in the copolymer while keeping the solution temperature at 40°C. During the saponification, a saponification product was precipitated to form a slurry. Thereafter, 1 equivalent of acetic acid based on the added sodium hydroxide amount was added to the slurry, and methanol was added to the slurry to adjust the resin concentration of the slurry at 9 %. Then, the resulting slurry was stirred in the kneader for 15 minutes, and the resulting product was filtered out and dried in a hot air drier. Thus, a PVA resin was prepared.

The saponification degree of the PVA resin thus prepared was 98.8 mol% as determined through an analysis based on an alkali consumption required for the hydrolysis of the remaining vinyl acetate and the remaining 3,4-diacetoxy-l-butene. The average polymerization degree was 450 as determined through an analysis performed in conformity with JIS K6726. The amount of the 1,2-diol structure introduced into side chains was 3 mol% as determined based on measurement of $^1$H-NMR spectrum (using DMSO-d6 as a solvent and tetramethylsilane as an internal standard). The amount of sodium acetate was 0.02 mol%.

Then, 0.039 mol% of magnesium acetate ($Mg(Ac)_2$) based on the total amount of the structural units of the PVA resin thus prepared was blended with the PVA resin, and then the resulting mixture was melt-kneaded at a resin temperature of 210°C by means of a twin screw extruder (KZW-15-60MG produced by Technovel Corporation and having a screw diameter of 15 mm and L/D of 60). Thus, a PVA resin (B9-y) was prepared in a pellet form.

(4) Preparation of PVA resin (B10-y)

A PVA resin (B10-y) was prepared in a pellet form in substantially the same manner as the PVA resin (B9-y), except that the proportions of magnesium acetate and sodium acetate were changed as shown in Table 3.

Example 5

<Three-layer structure including layers (A) and layer (B)>

The PET resin (IS226S) and the PVA resin (B1-y) were used as the layer (A) material and the layer (B) material, respectively, and a laminate (film) having a three-layer structure of layer (A)/layer (B)/layer (A) (having a total thickness of 100 μm) including a 40-μm thick layer (A), a 20-μm thick layer (B) and a 40-μm thick layer (A) was produced by means of a melt-extruder having a two-type three-layer T-die.

The resin temperature of the PET resin was 260°C to 280°C, and the resin temperature of the PVA resin was 240°C. The PET resin and the PVA resin were extruded at a die temperature of 260°C, and an extruded multilayer resin film was cooled by a 40°C roll. Thus, the multilayer structure was produced.

<Delamination resistance (T-peel)>

As in the examples according to the feature (x), the peel strength between the layer (A) and the layer (B) of the three-layer structure (film) thus produced was measured under the following conditions, and the results are shown below in Table 3.
Sample: having a width of 15 mm and a length of 200 mm
Device: Autograph AG-100 produced by Shimadzu Corporation
Measurement method: T-peel method (n=5)
Peeling rate: 100 mm/min

Examples 6 to 13 and Comparative Examples 3 to 5

Three-layer structures were produced in substantially the same manner as in Example 5, except that PET resins and PVA resins shown below in Table 3 were used as the layer (A) material and the layer (B) material. Then, the three-layer structures were evaluated in the same manner as in Example 5. The results are shown below in Table 3.

Table 3 (according to feature (y))

| | PVA resin | | | | | PET resin | | | Peel strength (mN/cm) |
|---|---|---|---|---|---|---|---|---|---|
| | Type | Modification amount (mol%) | $Mg(Ac)_2$ (mol%) | NaAc (mol%) | Total amount | Type | Copolymerizatio n ratio (mol%)*1 | AV value | |
| Example 5 | B1-y | 6.0 | 0.039 | 0.17 | 0.209 | IG226S | 12.0 | 24 | 33 |
| Example 6 | B2-y | 6.0 | 0.019 | 0.17 | 0.189 | IG226S | 12.0 | 24 | 26 |
| Example 7 | B3-y | 6.0 | 0.0039 | 0.17 | 0.1739 | IG226S | 12.0 | 24 | 25 |
| Example 8 | B4-y | 6.0 | 0 | 0.4 | 0.4 | IG226S | 12.0 | 24 | 22 |
| Example 9 | B5-y | 6.0 | 0 | 0.06 | 0.06 | IG226S | 12.0 | 24 | 16 |
| Comparative Example 3 | B6-y | 6.0 | 0 | 0.02 | 0.02 | IG226S | 12.0 | 24 | 8 |
| Comparative Example 4 | B7-y | 6.0 | 0.8 | 0.4 | 1.20 | IG226S | 12.0 | 24 | NA |
| Example 10 | B1-y | 6.0 | 0.039 | 0.17 | 0.209 | BK-6180C | 2.0 | 8 | 18 |
| Comparative Example 5 | B1-y | 6.0 | 0.039 | 0.17 | 0.209 | GG500 | 0.0 | 10 | 15 |
| Example 11 | B9-y | 3.0 | 0.039 | 0.02 | 0.059 | IG226S | 12.0 | 24 | 23 |
| Example 12 | B10-y | 3.0 | 0.039 | 0.17 | 0.209 | IG226S | 12.0 | 24 | 26 |
| Example 13 | B8-y | 6.0 | 0.039*2 | 0.17 | 0.209 | IG226S | 12.0 | 24 | 23 |

*1: Copolymerization ratio (feed amount for polymerization) of non-terephthalic-acid dicarboxylic acid in dicarboxylic acid component.
*2: Magnesium stearate was used as alkali earth metal salt.

The above results indicate that the inventive examples were excellent in interlayer adhesion.

In Comparative Example 3 in which the metal salt was blended in a smaller amount on the order of 0.02 mol%, it was impossible to create the effect of the catalyst. As a result, the interlayer adhesion was poorer. In Comparative Example 4 in which the metal salt was blended in a greater amount on the order of 1.2 mol%, a great amount of gas was generated supposedly because of the thermal decomposition of the PVA resin, so that numerous gas bubbles are trapped in the layer. Therefore, it was impossible to provide a multilayer structure available for the evaluation.

In Comparative Example 5 in which the PET resin layer (A) was composed of terephthalic acid alone, the delamination resistance was poorer with a lower T-peel value.

«Examples according to feature (z) »

<Preparation of materials>

<Layer(A) material>

The production of the specific PET resin, and the measurement and the evaluation of the physical properties of the PET resin were carried out in the following manner.

(1) Intrinsic viscosity (IV)

About 0.25 g of a PET resin sample was dissolved in about 25 ml of a phenol/1,1,2,2-tetrachloroethane solvent mixture (weight ratio of 1/1) to provide a solution having a concentration of 1.00 g/dL, and then the solution was cooled to and kept at 30°C. Then, the number of seconds required for the sample solution to drop and the number of seconds required for the solvent mixture to drop were measured by means of a full-automatic solution viscometer (2CH MODEL DT504 produced by Chuo Rika Kogyo Corporation). The intrinsic viscosity (IV) was calculated from the following expression (2):

$$IV = ((1 + 4KH \cdot \eta sp)^{0.5} - 1)/(2KH \cdot C) \quad .....(2)$$

wherein $\eta sp = \eta/\eta 0 - 1$, $\eta$ is the number of seconds required for the sample solution to drop, $\eta 0$ is the number of seconds required for the solvent mixture to drop, C is the concentration (g/dL) of the sample solution, and KH is Huggins constant (KH is herein 0.33). Conditions for the dissolution of the sample were 110 °C and 30 minutes.

(2) Terminal carboxyl group concentration (AV)

The PET resin sample was ground, then dried at 140 °C for 15 minutes by means of a hot air drier and cooled to a room temperature in a desiccator. Then, 0.1 g of the cooled sample was precisely weighed out in a test tube, and dissolved in 3 mL of benzyl alcohol added in the test tube at 195°C for 3 minutes while dry nitrogen gas was blown into the test tube. Thereafter, 5 mL of chloroform was gradually added into the test tube, and the resulting solution was cooled to a room temperature. One or two droplets of Phenol Red indicator were added to the resulting solution, and the solution was titrated with a benzyl alcohol solution of 0.1 N sodium hydroxide with stirring while dry nitrogen gas was blown into the test tube. The titration was completed when the color of the solution was changed from yellow to red. Blank titration was carried out in the same manner without the use of the PET resin sample. The terminal carboxyl group concentration (AV) was calculated from the following expression:

$$AV \text{ (equivalents/ton)} = (A - B) \times 0.1 \times f/W$$

wherein A is the amount (μL) of the benzyl alcohol solution of 0.1 N sodium hydroxide required for the titration of the sample, B is the amount (μL) of the benzyl alcohol solution of 0.1 N sodium hydroxide required for the blank titration, W is the amount (g) of the PET resin sample, and f is the titer of the benzyl alcohol solution of 0.1 N sodium hydroxide.

The titer (f) of the benzyl alcohol solution of 0.1 N sodium hydroxide was determined by putting 5 mL of methanol in a test tube, adding one or two droplets of a Phenol Red ethanol solution as an indicator into the test tube, titrating the resulting solution with 0.4 mL of the benzyl alcohol solution of 0.1 N sodium hydroxide to a color change point, adding 0.2 mL of a 0.1 N hydrochloric acid aqueous solution having a known titer as a reference liquid, and titrating the resulting solution again with the benzyl alcohol solution of 0.1 N sodium hydroxide to a color change point (this operation was

performed while dry nitrogen gas was blown into the test tube).

The titer (f) was calculated from the following expression:

Titer (f) = Titer of 0.1 N hydrochloric acid aqueous solution × Amount (μL) of 0.1 N hydrochloric acid aqueous solution/Amount (μL) of benzyl alcohol solution of 0.1 N sodium hydroxide required for titration

(1) Preparation of PET resin (MMA15)

A PET resin which contained a dicarboxylic acid component including terephthalic acid and isophthalic acid and having an isophthalic acid copolymerization ratio of 20 mol% based on the overall amount of the dicarboxylic acid component and a diol component including ethylene glycol was prepared in the following manner.

First, 39.8 kg of dimethyl terephthalate (hereinafter sometimes abbreviated as "DMT"), 10.0 kg of dimethyl isophthalate (hereinafter sometimes abbreviated as "DMI") and 35.4 kg of ethylene glycol (hereinafter sometimes abbreviated as "EG") were fed in a diol/acid molar ratio of 2.2 in a stainless steel autoclave having a stirrer and an extraction tube. Then, 700 ppm by weight of magnesium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 150 ppm by weight of a tetrabutyl titanate catalyst and 320 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. Thus, a PET resin (MMA15) was prepared which had an AV value of 35 equivalents/ton and an intrinsic viscosity of 0.70.

(2) Preparation of PET resin (GG500)

Like the PET resin (GG500) used in the examples according to the features (x) and (y), a PET resin which contained a dicarboxylic acid component including terephthalic acid alone and a diol component including ethylene glycol was prepared in the following manner.

First, 49.8 kg of DMT and 33.1 kg of EG were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 150 ppm by weight of a germanium dioxide catalyst and 240 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 6 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 215°C for 10 hours in a nitrogen stream in an inert oven (INERT OVEN IPHH201 produced by TABAI ESPEC Corporation). Thus, a PET resin (GG500) was prepared which had an AV value of 10 equivalents/ton and an intrinsic viscosity of 0.77.

(3) Preparation of PET resin (GF101X)

A PET resin which contained a dicarboxylic acid component including terephthalic acid alone and a diol component including ethylene glycol was prepared in the following manner.

First, 49.8 kg of DMT and 33.1 kg of EG were fed in a diol/acid molar ratio of 2.2 in a stainless steel autoclave having a stirrer and an extraction tube. Then, 700 ppm by weight of magnesium acetate tetrahydrate based on the amount of a polyester to be obtained was added to the resulting mixture, and an ester interchange reaction was allowed to proceed at 250°C at an absolute pressure of 101 kPa for 5 hours while methanol generated as a side product was

removed. After the completion of the ester interchange reaction, 150 ppm by weight of a tetrabutyl titanate catalyst and 320 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. Thus, a PET resin (GF101X) was prepared which had an AV value of 49 equivalents/ton and an intrinsic viscosity of 0.67.

(4) Preparation of PET resin (RF553C)

A PET resin which contained a dicarboxylic acid component including terephthalic acid alone and a diol component including ethylene glycol was prepared in the following manner.

First, 49.8 kg of DMT and 33.1 kg of EG were fed in a diol/acid molar ratio of 2.2 in a stainless steel autoclave having a stirrer and an extraction tube. Then, 300 ppm by weight of magnesium acetate tetrahydrate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 50 ppm by weight of a tetrabutyl titanate catalyst and 45 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. The resulting polyester copolymer resin pellets were preliminarily crystallized at 100°C for 8 hours in a nitrogen atmosphere, and then subjected to solid-phase polycondensation at 215°C for 20 hours in a nitrogen stream in an inert oven (INERT OVEN IPHH201 produced by TABAI ESPEC Corporation). Thus, a PET resin (RF553C) was prepared which had an AV value of 8 equivalents/ton and an intrinsic viscosity of 0.83.

(5) Preparation of PET resin (IS654)

Like the PET resin (IS654) used in the example according to the feature (x), a PET resin which contained a dicarboxylic acid component including terephthalic acid and isophthalic acid and having an isophthalic acid copolymerization ratio of 30 mol% based on the overall amount of the dicarboxylic acid component and a diol component including ethylene glycol was prepared in the following manner.

First, 34.9 kg of DMT, 14.9 kg of DMI and 35.4 kg of EG were fed in a diol/acid molar ratio of 2.2 in a stainless steel autoclave having a stirrer and an extraction tube. Then, 300 ppm by weight of calcium acetate based on the amount of a polyester to be obtained was added to the resulting mixture, and an ester interchange reaction was allowed to proceed at 250°C at an absolute pressure of 101 kPa for 5 hours while methanol generated as a side product was removed. After the completion of the ester interchange reaction, 240 ppm by weight of an antimony trioxide catalyst and 350 ppm by weight of triethyl phosphate based on the amount of the polyester to be obtained were added in the form of an ethylene glycol solution to the resulting mixture, and a melt-polycondensation reaction was allowed to proceed at 280°C at a reduced pressure on the order of 66 Pa for 8 hours. Then, the resulting resin was extracted in a strand form, and the resulting strands were cooled with water and cut into pellets. Thus, a PET resin (IS654) was prepared which had an AV value of 33 equivalents/ton and an intrinsic viscosity of 0.72.

<Layer (B) material>

(1) Preparation of PVA resin (B1-z)

First, 305.0 g of vinyl acetate, 219.8 g of methanol and 19.2 g of 3, 4-diacetoxy-1-butene were fed into a reaction can provided with a reflux condenser, a dropping funnel and a stirrer, and then 37.8 g of a methanol solution of 4 % t-butyl peroxyneodecanoate (having a half life of 102 minutes) was added to the resulting mixture in 610 minutes in a nitrogen gas stream with stirring and heating for polymerization. After a lapse of 30 minutes from the start of the polymerization, 480 g of vinyl acetate and 28.8 g of 3,4-diacetoxy-1-butene were added to the resulting mixture in 420 minutes and further subjected to polymerization for 105 minutes. When the polymerization percentage of vinyl acetate reached 89.5 %, 38 ppm of p-methoxyphenol (based on the fed vinyl acetate amount) was added as a polymerization inhibitor to end the polymerization. Subsequently, unreacted vinyl acetate monomers were expelled outside the system by blowing methanol vapor, whereby a methanol solution of a copolymer was prepared.

In turn, the solution was diluted with methanol to a copolymer concentration of 66 %, and fed into a kneader. Then, the solution was subjected to saponification by adding a methanol solution of 2 % sodium hydroxide in a proportion of 12 mmol per 1 mol of the total of vinyl acetate and 3,4-diacetoxy-1-butene in the copolymer while keeping the solution

temperature at 40°C. During the saponification, a saponification product was precipitated to form a slurry. Thereafter, 1 equivalent of acetic acid based on the added sodium hydroxide amount was added to the slurry, and methanol was added to the slurry to adjust the resin concentration of the slurry at 9 %. Then, the resulting slurry was stirred in the kneader for 15 minutes, and the resulting product was filtered out. The product was dispersed again in methanol with stirring, filtered out and dried in a hot air drier. Thus, a PVA resin (B1-z) was prepared.

The saponification degree of the PVA resin (B1-z) thus prepared was 98.8 mol% as determined through an analysis based on an alkali consumption required for the hydrolysis of the remaining vinyl acetate and the remaining 3,4-diacetoxy-1-butene. The average polymerization degree was 450 as determined through an analysis performed in conformity with JIS K6726. The amount of the 1,2-diol structure introduced into side chains was 3 mol% as determined based on measurement of $^1$H-NMR spectrum (using DMSO-d6 as a solvent and tetramethylsilane as an internal standard). The amount of sodium acetate which was a side product of the saponification and was not removed by the rinsing with methanol was 0.02 mol%.

(2) Preparation of PVA resin (B2-z)

First, 321.4 g of vinyl acetate, 241.1 g of methanol and 38.6 g of 3, 4-diacetoxy-1-butene were fed into a reaction can provided with a reflux condenser, a dropping funnel and a stirrer, and then 37.8 g of a methanol solution of 4 % t-butyl peroxyneodecanoate (having a half life of 102 minutes) was added to the resulting mixture in 610 minutes in a nitrogen gas stream with stirring and heating for polymerization. After a lapse of 35 minutes from the start of the polymerization, 571.4 g of vinyl acetate and 68.6 g of 3,4-diacetoxy-1-butene were added to the resulting mixture in 480 minutes and further subjected to polymerization for 105 minutes. When the polymerization percentage of vinyl acetate reached 89.5 %, 38 ppm of p-methoxyphenol (based on the fed vinyl acetate amount) was added as a polymerization inhibitor to end the polymerization. Subsequently, unreacted vinyl acetate monomers were expelled outside the system by blowing methanol vapor, whereby a methanol solution of a copolymer was prepared.

In turn, the solution was diluted with methanol to a copolymer concentration of 66 %, and fed into a kneader. Then, the solution was subjected to saponification by adding a methanol solution of 2 % sodium hydroxide in a proportion of 12 mmol per 1 mol of the total of vinyl acetate and 3,4-diacetoxy-1-butene in the copolymer while keeping the solution temperature at 40°C. During the saponification, a saponification product was precipitated to form a slurry. Thereafter, 1 equivalent of acetic acid based on the added sodium hydroxide amount was added to the slurry, and methanol was added to the slurry to adjust the resin concentration of the slurry at 9 %. Then, the resulting slurry was stirred in the kneader for 15 minutes, and the resulting product was filtered out. Then, the product was dispersed again in methanol with stirring, filtered out, and dried in a hot air drier. Thus, a PVA resin was prepared.

The saponification degree of the PVA resin (B2-z) thus prepared was 98.7 mol% as determined through an analysis based on an alkali consumption required for the hydrolysis of the remaining vinyl acetate and the remaining 3,4-diacetoxy-1-butene. The average polymerization degree was 450 as determined through an analysis performed in conformity with JIS K6726. The amount of the 1,2-diol structure introduced into side chains was 6 mol% as determined based on measurement of $^1$H-NMR spectrum (using DMSO-d6 as a solvent and tetramethylsilane as an internal standard). The amount of sodium acetate was 0.02 mol%.

(3) Preparation of PVA resin (B3-z)

First, 0.17 mol% of sodium acetate (NaAc) based on the total amount of the structural units of the PVA resin (B2-z) was blended with the PVA resin (B2-z), and then the resulting mixture was melt-kneaded at a resin temperature of 210°C by means of a twin screw extruder (KZW-15-60MG produced by Technovel Corporation and having a screw diameter of 15 mm and L/D of 60). Thus, a PVA resin (B3-z) was prepared in a pellet form.

(4) Preparation of PVA resin (B4-z)

First, 0.039 mol% of magnesium acetate ($Mg(Ac)_2$) and 0.17 mol% of sodium acetate (NaAc) based on the total amount of the structural units of the PVA resin (B2-z) were blended with the PVA resin (B2-z), and then the resulting mixture was melt-kneaded at a resin temperature of 210°C by means of a twin screw extruder (KZW-15-60MG produced by Technovel Corporation and having a screw diameter of 15 mm and L/D of 60). Thus, a PVA resin (B4-z) was prepared in a pellet form.

Example 14

<Two-layer structure including layer (A) and layer (B) >

The PET resin (MMA15) and the PVA resin (B1-z) were used as the layer (A) material and the layer (B) material, respectively, and a laminate (film) having a three-layer structure of layer (A)/layer (B) /layer (A) (having a total thickness of 100 μm) including a 40-μm thick layer (A), a 20-μm thick layer (B) and a 40-μm thick layer (A) was produced by means of a melt-extruder having a two-type three-layer T-die.

The resin temperature of the PET resin was 260°C to 280°C, and the resin temperature of the PVA resin was 240°C. The PET resin and the PVA resin were extruded at a die temperature of 260°C, and an extruded multilayer resin film was cooled by a 40°C roll. Thus, the multilayer structure was produced.

<Delamination resistance (T-peel)>

As in the examples according to the features (x) and (y), the peel strength between the layer (A) and the layer (B) of the three-layer structure (film) thus produced was measured under the following conditions, and the results are shown below in Table 4. Sample: having a width of 15 mm and a length of 200 mm
Device: Autograph AG-100 produced by Shimadzu Corporation
Measurement method: T-peel method (n=5)
Peeling rate: 100 mm/min

Examples 15 to 17 and Comparative Examples 6 and 7

Three-layer structures were produced in substantially the same manner as in Example 14, except that PET resins and PVA resins shown below in Table 4 were used as the layer (A) material and the layer (B) material. Then, the three-layer structures were evaluated in the same manner as in Example 14. The results are shown below in Table 4.

Table 4 (according to feature (z))

| | PVA resin | | | | | PET resin | | | Peel strength (mN/cm) |
|---|---|---|---|---|---|---|---|---|---|
| | Type | Modification amount (mol%) | $Mg(Ac)_2$ (mol%) | NaAc (mol%) | Total amount | Type | Copolymerizat ion ratio (mol%)*1 | AV value *2 | |
| Example 14 | B1-z | 3.0 | 0 | 0.02 | 0.02 | MMA15 | 20 | 35 | 15 |
| Comparative Example 6 | B1-z | 3.0 | 0 | 0.02 | 0.02 | GG500 | 0 | 10 | 7 |
| Example 15 | B2-z | 6.0 | 0 | 0.02 | 0.02 | GF101X | 0 | 49 | 15 |
| Example 16 | B3-z | 6.0 | 0 | 0.17 | 0.17 | MMA15 | 20 | 35 | 18 |
| Comparative Example 7 | B3-z | 6.0 | 0 | 0.17 | 0.17 | RF553C | 0 | 8 | 12 |
| Example 17 | B4-z | 6.0 | 0.039 | 0.17 | 0.209 | IS654 | 30 | 33 | 37 |

*1: Copolymerization ratio (feed amount for polymerization) of non-terephthalic-acid dicarboxylic acid in dicarboxylic acid component.
*2: Corresponds to terminal carboxyl group concentration (mol/ton)

The above results indicate that the inventive examples were excellent in interlayer adhesion. The results further indicate that Example 16 in which the polyethylene terephthalate resin containing isophthalic acid as a comonomer was used for the layer (A) and Example 17 in which the material prepared by adding the alkali metal salt and the alkali earth metal salt (magnesium acetate and sodium acetate) to the PVA resin was used for the layer (B) were particularly excellent in interlayer adhesion.

In Comparative Examples 6 and 7 which employed the PET resin having an excessively low terminal carboxyl group concentration, in contrast, the esterification reaction with the diol component did not sufficiently occur with a smaller number of carboxyl groups serving as reaction sites, failing to create the effect of improving the adhesion. As a result, Comparative Examples 6 and 7 were poorer in interlayer adhesion.

Although specific forms of embodiments of the instant invention have been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention.

INDUSTRIAL APPLICABILITY

The multilayer structure according to the present invention can be used, for example, in applications of various packaging materials such as food packaging materials, medical drug packaging materials, industrial agent packaging materials and agricultural agent packaging materials, and various container materials.

**Claims**

1. A multilayer structure comprising:

(A) a layer consisting primarily of a polyethylene terephthalate resin which comprises a dicarboxylic acid component unit including terephthalic acid and a diol component unit primarily including ethylene glycol; and
(B) a layer provided in stacked adjacent relation to the layer (A) and consisting primarily of a polyvinyl alcohol resin having a structural unit represented by the following general formula (1):

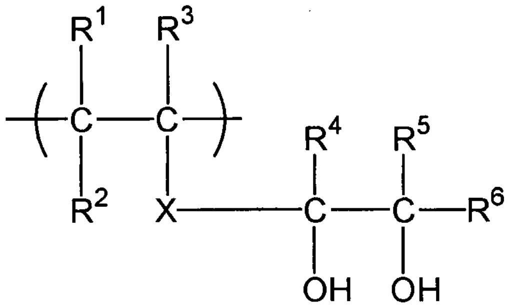

..... (1)

wherein $R^1$, $R^2$ and $R^3$ each independently represent a hydrogen atom or an organic group; X represents a single bond or a bond chain; and $R^4$, $R^5$ and $R^6$ each independently represent a hydrogen atom or an organic group,
wherein a relationship between the layer (A) and the layer (B) has any one of the following features (x) to (z) :

(x) the layer (A) consisting primarily of the polyethylene terephthalate resin which comprises the dicarboxylic acid component unit including terephthalic acid and the diol component unit primarily including ethylene glycol, the copolymerization ratio of a non-terephthalic-acid dicarboxylic acid in the dicarboxylic acid component being 15 to 40 mol% based on an overall amount of the dicarboxylic acid component, the layer (B) consisting primarily of the polyvinyl alcohol resin having the structural unit represented by the above general formula (1);
(y) the layer (A) consisting primarily of the polyethylene terephthalate resin which comprises the dicarboxylic acid component unit including terephthalic acid and the diol component unit primarily including ethylene glycol, the copolymerization ratio of a non-terephthalic-acid dicarboxylic acid in the dicarboxylic acid component being not less than 2 mol% and less than 15 mol% based on an overall amount of the dicarboxylic acid component, the layer (B) consisting primarily of the polyvinyl alcohol resin having the structural unit

represented by the above general formula (1) and further comprising 0.03 to 1 mol% of at least one of an alkali metal salt and an alkali earth metal salt based on a total amount of structural units of the polyvinyl alcohol resin; and

(z) the layer (A) consisting primarily of the polyethylene terephthalate resin which comprises the dicarboxylic acid component unit including terephthalic acid and the diol component unit primarily including ethylene glycol, the polyethylene terephthalate resin having a terminal carboxyl group concentration of 15 to 60 equivalents/ton, the layer (B) consisting primarily of the polyvinyl alcohol resin having the structural unit represented by the above general formula (1).

**2.** The multilayer structure according to claim 1, wherein layer (B) consisting primarily of the polyvinyl alcohol resin further comprises 0.001 to 1 mol% of at least one of an alkali metal salt and an alkali earth metal salt based on a total amount of structural units of the polyvinyl alcohol resin in the feature (x).

**3.** The multilayer structure according to claim 1, wherein the polyethylene terephthalate resin primarily includes terephthalic acid as the dicarboxylic acid component and ethylene glycol as the diol component, and the copolymerization ratio of a non-terephthalic-acid dicarboxylic acid in the dicarboxylic acid component is 2 to 40 mol% based on an overall amount of the dicarboxylic acid component in the feature (z).

**4.** The multilayer structure according to claim 1 or 3, wherein the layer (B) consisting primarily of the polyvinyl alcohol resin further comprises 0.001 to 1 mol% of at least one of an alkali metal salt and an alkali earth metal salt based on a total amount of structural units of the polyvinyl alcohol resin in the feature (z).

**5.** The multilayer structure according to any one of claims 1 to 4, wherein the non-terephthalic-acid dicarboxylic acid is isophthalic acid.

## Patentansprüche

**1.** Mehrschichtstruktur umfassend:

(A) eine Schicht vorwiegend bestehend aus einem Polyethylenterephthalatharz, das eine Dicarbonsäurebestandteileinheit einschließlich Terephthalsäure und eine Diolbestandteileinheit vorwiegend enthaltend Ethylenglykol umfasst; und

(B) eine Schicht, die in einer gestapelt benachbarten Relation zur Schicht (A) bereitgestellt wird und vorwiegend aus einem Polyvinylalkoholharz mit einer Struktureinheit besteht, die durch die folgende allgemeine Formel (1) dargestellt wird:

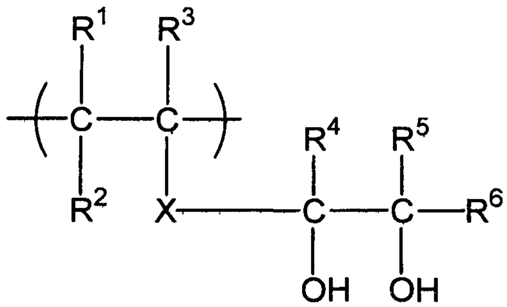

.....(1),

wobei $R^1$, $R^2$ und $R^3$ jeweils unabhängig ein Wasserstoffatom oder eine organische Gruppe darstellen; X eine Einfachbindung oder eine gebundene Kette darstellt; und $R^4$, $R^5$ und $R^6$ jeweils unabhängig ein Wasserstoffatom oder eine organische Gruppe darstellen,

wobei eine Beziehung zwischen der Schicht (A) und der Schicht (B) irgendeine der folgenden Merkmale (x) bis (z) aufweist:

(x) die Schicht (A) besteht vorwiegend aus dem Polyethylenterephthalatharz, das die Dicarbonsäurebestandteileinheit einschließlich Terephthalsäure und die Diolbestandteileinheit vorwiegend enthaltend Ethylenglykol umfasst, das Copolymerisationsverhältnis von einer Nicht-Terephthalsäuredicarbonsäure in dem

Dicarbonsäurebestandteil 15 bis 40 mol% basierend auf der Gesamtmenge des Dicarbonsäurebestandteils ist, die Schicht (B) vorwiegend aus dem Polyvinylalkoholharz besteht, das die Struktureinheit aufweist, die durch die obige allgemeine Formel (1) dargestellt wird;

(y) die Schicht (A) besteht vorwiegend aus dem Polyethylenterephthalatharz, das die Dicarbonsäurebestandteileinheit einschließlich Terephthalsäure und die Diolbestandteileinheit vorwiegend enthaltend Ethylenglykol umfasst, das Copolymerisationsverhältnis der Nicht-Terephthalsäuredicarbonsäure in dem Dicarbonsäurebestandteil nicht geringer ist als 2 mol% und geringer ist als 15 mol% basierend auf der Gesamtmenge des Dicarbonsäurebestandteils, die Schicht (B) vorwiegend aus einem Polyvinylalkoholharz besteht, das eine Struktureinheit aufweist, die durch die obige allgemeine Formel (1) dargestellt wird, und ferner 0,3 bis 1 mol% mindestens eines aus einem Alkalimetallsalz und einem Erdalkalimetallsalz umfasst basierend auf einer Gesamtmenge der Struktureinheiten des Polyvinylalkoholharzes; und

(z) die Schicht (A) besteht vorwiegend aus dem Polyethylenterephthalatharz, das die Dicarbonsäurebestandteileinheit einschließlich Terephthalsäure und die Diolkomponenteneinheit vorwiegend enthaltend Ethylenglykol umfasst, das Polyethylenterephthalatharz eine Carboxylendgruppenkonzentration von 15 bis 60 Äquivalenten/Tonne aufweist, die Schicht (B) vorwiegend aus dem Polyvinylalkoholharz besteht, das eine Struktureinheit aufweist, die durch die obige allgemeine Formel (1) dargestellt wird.

2. Mehrschichtstruktur nach Anspruch 1, wobei die Schicht (B) vorwiegend bestehend aus dem Polyvinylalkoholharz, ferner 0,001 bis 1 mol% von mindestens einem aus einem Alkalimetallsalz und einem Erdalkalimetallsalz basierend auf der Gesamtmenge der Struktureinheiten des Polyvinylalkoholharzes in Merkmal (x) umfasst.

3. Mehrschichtstruktur nach Anspruch 1, wobei das Polyethylenterephthalatharz vorzugsweise eine Terephthalsäure wie den Dicarbonsäurebestandteil und Ethylenglykol wie den Diolbestandteil einschließt, und das Copolymerisationsverhältnis einer Nicht-Terephthalsäuredicarbonsäure in dem Dicarbonsäurebestandteil 2 bis 40 mol% basierend auf der Gesamtmenge des Dicarbonsäurebestandteils in Merkmal (z) beträgt.

4. Mehrschichtstruktur nach Anspruch 1 oder 3, wobei die Schicht (B) vornehmlich bestehend aus dem Polyvinylalkoholharz, ferner 0,001 bis 1 mol% von mindestens einem aus einem Alkalimetallsalz und einem Erdalkalimetallsalz basierend auf einer gesamten Menge der Struktureinheiten des Polyvinylalkoholharzes in Merkmal (z) umfasst.

5. Mehrschichtstruktur nach einem der Ansprüche 1 bis 4, wobei die Nicht-Terephthalsäuredicarbonsäure Isophthalsäure ist.

## Revendications

1. Structure multicouche, comprenant :

(A) une couche consistant essentiellement en une résine de poly(téréphtalate d'éthylène), qui comprend une unité avec un composant acide dicarboxylique, qui se compose d'acide téréphtalique, et une unité avec un composant diol, qui se compose essentiellement d'éthylèneglycol ; et

(B) une couche disposée selon une relation adjacente superposée avec la couche (A) et consistant essentiellement en une résine poly(alcool vinylique) ayant une unité structurale représentée par la formule générale (1) suivante :

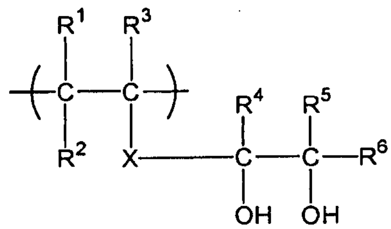

(1)

où $R^1$, $R^2$ et $R^3$ représentent chacun indépendamment, l'atome d'hydrogène ou un radical organique ; X représente une simple liaison ou une chaine de liaison ; et $R^4$, $R^5$ et $R^6$ représentent chacun indépendamment, l'atome d'hydrogène ou un radical organique,

où la relation entre la couche (A) et la couche (B) présente l'une quelconque des caractéristiques (x) à (z)

suivantes :

(x) la couche (A) consistant essentiellement en la résine de poly(téréphtalate d'éthylène), qui comprend l'unité avec un composant acide dicarboxylique, qui se compose d'acide téréphtalique, et l'unité avec un composant diol, qui se compose essentiellement d'éthylèneglycol, où le rapport de copolymérisation d'un acide dicarboxylique différent de l'acide téréphtalique dans le composant acide dicarboxylique se situe dans l'intervalle allant de 15 à 40% en moles sur base de la quantité globale de composant acide dicarboxylique, la couche (B) consistant essentiellement en la résine poly(alcool vinylique) ayant l'unité structurale représentée par la formule générale (1) ci-dessus ;

(y) la couche (A) consistant essentiellement en la résine de poly(téréphtalate d'éthylène), qui comprend l'unité avec un composant acide dicarboxylique, qui se compose d'acide téréphtalique, et l'unité avec un composant diol, qui se compose essentiellement d'éthylèneglycol, où le rapport de copolymérisation d'un acide dicarboxylique différent de l'acide téréphtalique dans le composant acide dicarboxylique est non inférieur à 2% en moles et inférieur à 15% en moles sur base de la quantité globale de composant acide dicarboxylique, la couche (B) consistant essentiellement en la résine poly(alcool vinylique) ayant l'unité structurale représentée par la formule générale (1) ci-dessus, et comprenant en outre, 0,03 à 1% en moles d'au moins un parmi un sel de métal alcalin et un sel de métal alcalino-terreux sur base de la quantité totale des unités structurales de la résine poly(alcool vinylique) ; et

(z) la couche (A) consistant essentiellement en la résine de poly(téréphtalate d'éthylène), qui comprend l'unité avec un composant acide dicarboxylique, qui se compose d'acide téréphtalique, et l'unité avec un composant diol, qui se compose essentiellement d'éthylèneglycol, où la résine poly(téréphtalate d'éthylène) a une concentration en radical carboxy terminal située dans l'intervalle allant de 15 à 60 équivalents/tonne, la couche (B) consistant essentiellement en la résine poly(alcool vinylique) ayant l'unité structurale représentée par la formule générale (1) ci-dessus.

**2.** Structure multicouche selon la revendication 1, où la couche (B) consistant essentiellement en la résine poly(alcool vinylique), comprend en outre, 0,001 à 1% en moles d'au moins un parmi un sel de métal alcalin et un sel de métal alcalino-terreux sur base de la quantité totale des unités structurales de la résine poly(alcool vinylique) dans la caractéristique (x).

**3.** Structure multicouche selon la revendication 1, où la résine de poly(téréphtalate d'éthylène) comprend essentiellement, l'acide téréphtalique comme composant acide dicarboxylique, et l'éthylèneglycol comme composant diol, et le rapport de copolymérisation d'un acide dicarboxylique différent de l'acide téréphtalique dans le composant acide dicarboxylique se situe dans l'intervalle allant de 2 à 40% en moles sur base de la quantité globale de composant acide dicarboxylique dans la caractéristique (z).

**4.** Structure multicouche selon la revendication 1 ou 3, où la couche (B) consistant essentiellement en la résine poly(alcool vinylique), comprend en outre, 0,001 à 1% en moles d'au moins un parmi un sel de métal alcalin et un sel de métal alcalino-terreux sur base de la quantité totale des unités structurales de la résine poly(alcool vinylique) dans la caractéristique (z).

**5.** Structure multicouche selon l'une quelconque des revendications 1 à 4, où l'acide dicarboxylique différent de l'acide téréphtalique est l'acide isophtalique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000178396 A
- JP 2004075866 A
- US 20050079252 A1
- JP 2006123528 A
- JP 3281244 A
- JP 11348197 A
- WO 2008093615 A1
- JP 2000313721 A